Europäisches Patentamt

European Patent Office

Office européen des brevets

(19)

(11) **EP 0 570 602 B1**

(12) **EUROPÄISCHE PATENTSCHRIFT**

(45) Veröffentlichungstag und Bekanntmachung des Hinweises auf die Patenterteilung:
**20.03.1996 Patentblatt 1996/12**

(51) Int Cl.$^6$: **H02P 5/40**

(21) Anmeldenummer: **92106811.0**

(22) Anmeldetag: **21.04.1992**

(54) **Verfahren zur Regelung von Drehstrommaschinen mit dynamisch hochwertiger Erfassung von deren im elektrisch eingeschwungenen Zustand benötigten Statorspannungen**

Three-phase machine regulation method with high quality dynamical determination of its statorvoltages in the electrical steady state

Procédé de réglage de machines à courants triphasés à déterminaison précise dynamique de ses tensions stators en régime stationnaire

(84) Benannte Vertragsstaaten:
**ES FR GB IT**

(43) Veröffentlichungstag der Anmeldung:
**24.11.1993 Patentblatt 1993/47**

(73) Patentinhaber: **Rapp, Holger**
**D-71254 Ditzingen (DE)**

(72) Erfinder: **Rapp, Holger**
**D-71254 Ditzingen (DE)**

(56) Entgegenhaltungen:
**DE-A- 3 900 539          DE-A- 4 115 338**

- **IEEE INDUSTRY APPLICATIONS SOCIETY ANNUAL MEETING Oktober 1989, SAN DIEGO, CALIFORNIA, Seiten 248 - 253; T. IWASAKI & AL.: 'Application of an extended Kalman filter to parameter identification of an induction motor'**
- **EPE'89 POWER ELECTRONICS AND APPLICATIONS, 9. Oktober 1989, AACHEN, DE, Seiten 307 - 312; D.J.ATKINSON & AL.: 'Parameter identification techniques for induction motor drives'**
- **FOURTH INTERNATIONAL CONFERENCE ON POWER ELECTRONICS AND VARIABLE-SPEED DRIVES, 17. Juli 1990, VENUE, Seiten 388 - 393; A.DELL'AQUILA & AL.: 'Flux estimation by Kalman filter in inverter-fed induction motors'**

**Beschreibung**

In immer stärkerem Maße werden drehzahlregelbare elektrische Antriebe sowohl als Servoantriebe als auch als Hauptspindelantriebe in modernen Anlagen, wie z.B. in Bearbeitungszentren für die zerspanende Bearbeitung von Werkstoffen oder in automatisierten Transporteinrichtungen, eingesetzt. Dabei stehen dem Anwender heutzutage hauptsächlich drei grundsätzlich unterschiedliche Grundtypen elektrischer Maschinen zur Verfügung. Diese sind zum einen die Gleichstrommaschine, des weiteren die Synchronmaschine sowie - last but not least - die Asynchronmaschine. Von diesen drei Grundtypen zeichnet sich die Asynchronmaschine - wenn sie, wie üblich, als Käfigläufermaschine ausgeführt ist - insbesondere durch ihren einfachen mechanischen Aufbau und ihre damit verbundenen, niedrigen Herstellungskosten sowie durch ihre Robustheit bei Überlastbetrieb aus. Betrachtet man diese Vorteile, so liegt es zunächst nahe, den Löwenanteil sowohl auf dem Markt der Hauptspindelantriebe als auch auf jenem der Vorschubantriebe bei den Asynchronmaschinen zu vermuten.

Den Vorteilen der Asynchronmaschine steht aber ein großer Nachteil gegenüber: Die Richtung des sogenannten Rotorflußraumzeigers einer Asynchronmaschine ist weder statorfest - wie dies bei Gleichstrommaschinen der Fall ist - noch rotorfest - wie dies bei den modernen, permanenterregten Synchronmaschinen der Fall ist - vorgegeben. Vielmehr rotiert dieser Rotorflußraumzeiger bei Belastung der Maschine langsam über deren Rotor hinweg. Demzufolge handelt es sich bei der Asynchronmaschine sowohl bei deren Behandlung in einem statorbezogenen als auch bei deren Behandlung in einem rotorbezogenen Koordinatensystem um eine vermaschte Regelstrecke. Dies wiederum erhöht die Schwierigkeit einer regelungstechnischen Behandlung von Asynchronmaschinen gegenüber jener von Synchron- und Gleichstrommaschinen zunächst erheblich.

Im folgenden wird der Stand der Technik unter Bezugnahme auf die Zeichnung Fig. 1-3 beschrieben. Es zeigt

Fig. 1 ein für die Betrachtung der Asynchronmaschine im feldorientierten Koordinatensystem geeignetes Ersatzschaltbild;

Fig. 2 ein aus dem Ersatzschaltbild in Fig. 1 abgeleitetes, regelungstechnisches Blockschaltbild der Regelstrecke mit den Komponenten des feldorientierten Spannungsvektors ($u_d, u_q$) als Eingangsgrößen und den Komponenten des feldorientierten Statorstromvektors ($i_d, i_q$) als Ausgangsgrößen;

Fig. 3 ein Raumvektordiagramm zur Veranschaulichung der Auswirkungen einer Fehlorientierung des feldorientierten Koordinatensystems.

Einen großen Fortschritt bei der regelungstechnischen Führung von Asynchronmaschinen stellt die von Blaschke erstmals vorgestellte, sogenannte "feldorientierte Regelung" von Asynchronmaschinen dar [1]. Hierbei wird von einem sogenannten "feldorientierten Koordinatensystem" mit der sogenannten Längsachse d und der orthogonal zu dieser stehenden Querachse q Gebrauch gemacht. Dieses zeichnet sich dadurch aus, daß - eine optimale Funktion des feldorientierten Regelsystems vorausgesetzt - seine d-Achse stets in Richtung des Rotorflußraumzeigers $\vec{\psi}_R$ der Asynchronmaschine weist. Damit liegt aber umgekehrt auch fest, daß der Rotorflußraumzeiger $\vec{\psi}_R$ stets nur eine Komponente in d-Richtung des in Rede stehenden Koordinatensystems aufweist, jedoch keine in q-Richtung desselben. Betrachtet man nun auch den Statorstromraumzeiger $\vec{i}$ der Asynchronmaschine in diesem feldorientierten Koordinatensystem, so läßt sich dieser in eine Komponente $i_d$ in Richtung der d-Achse und in eine Komponente $i_q$ in Richtung der q-Achse zerlegen. Die Komponente $i_q$ des Statorstromraumzeigers $\vec{i}$ wird üblicherweise als Querstrom $i_q$ der Asynchronmaschine bezeichnet und beeinflußt unmittelbar das innere Drehmoment der Asynchronmaschine, jedoch nicht deren Rotorfluß. Sie wirkt also wie der Ankerstrom einer Gleichstrommaschine. In entsprechender Weise beeinflußt die Komponente $i_d$ des Statorstromraumzeigers $\vec{i}$, welche üblicherweise als Längsstrom $i_d$ der Asynchronmaschine bezeichnet wird, unmittelbar lediglich den Rotorfluß der Asynchronmaschine. Eine Beeinflussung des inneren Drehmoments der in Rede stehenden Maschine erfolgt lediglich mittelbar auf dem Weg über die Veränderung von deren Rotorfluß. Der Längsstrom $i_d$ wirkt also wie der Erregerstrom einer Gleichstrommaschine. Auf die soeben beschriebene Weise wird eine Entkopplung der vermaschten Regelstrecken für den Rotorfluß und das innere Moment der Asynchronmaschine erreicht. Die regelungstechnische Behandlung der Asynchronmaschine im feldorientierten Koordinatensystem wird so einfach wie jene einer Gleichstrommaschine.

In entsprechender Weise kann selbstverständlich auch bei der Regelung permanenterregter Synchronmaschinen vorgegangen werden. Dabei vereinfacht sich die Problemstellung allerdings erheblich, denn der Rotorflußraumzeiger einer permanenterregten Synchronmaschine ist rotorfest vorgegeben. Die momentane Lage des feldorientierten Koordinatensystems mit den Achsen d und q gegenüber einem statororientierten Koordinatensystem kann hier also ohne weitere Operationen direkt aus dem Rotorpositionswinkel der zu regelnden Synchronmaschine abgeleitet werden.

Bei all diesen Erläuterungen wurde jedoch stets eine optimale Funktion eines solchen, feldorientierten Regelsystems vorausgesetzt. Diese optimale Funktion ist aber in der Praxis leider meist nicht gegeben. Die beiden Hauptursachen hierfür sind im folgenden erläutert.

Im folgenden sei derjenige Teil eines feldorientierten Regelsystems für Asynchronmaschinen oder für permanenterregte Synchronmaschinen, welcher die Regelung der Maschine bis hin zur Vorgabe der Sollwerte für die Statorströme in feldorientierten Koordinaten sowie eine eventuell nachfolgende Transformation dieser Sollwerte in ein anderes Koordinatensystem bewerkstelligt, als Führungssystem bezeichnet. Dieses ist somit als Teileinheit eines feldorientierten Regelsystems zu verstehen. Des weiteren ist im folgenden immer dann, wenn eine Unterscheidung zwischen Asynchronmaschine und permanenterregter Synchronmaschine im dann vorliegenden Zusammenhang nicht notwendig ist, stets allgemein von einer Drehstrommaschine die Rede.

Ein erster Problemkreis ist jener der Einstellung der gewünschten Statorströme der Drehstrommaschine. Bei den von einem Führungssystem ausgegebenen Größen handelt es sich ja lediglich um Sollwerte für die einzustellenden Ströme, welche zudem meist in einem gegenüber dem Stator rotierenden Koordinatensystem vorgegeben sind. Zur Einstellung der vom Führungssystem gewünschten Ströme ist also zum einen eine Funktionseinheit zur Transformation der feldorientierten Größen in das statorfeste Koordinatensystem und zum anderen eine Funktionseinheit zur Stromregelung erforderlich. Dabei kann die zuletzt genannte Einheit zur Stromregelung entweder mit Größen des statororientierten Koordinatensystems oder mit Größen des feldorientierten Koordinatensystems arbeiten.

Eine sehr einfache Lösung des anstehenden Problems besteht darin, die feldorientierten Strolnsollwerte $i_{d,soll}$ sowie $i_{q,soll}$ zunächst in ein statororientiertes Koordinatensystem zu transformieren und die so gewonnenen statororientierten Stromsollwerte einem dreiphasigen Umrichter mit einer Stromregeleinheit, welche nach dem Prinzip der zeitdiskreten Schaltzustandsänderung arbeitet, zuzuführen [2]. Auf diese Weise kann eine dynamisch hochwertige Stromregelung, welche im Bedarfsfall selbsttätig die volle, zur Verfügung stehende Stellreserve des verwendeten, dreiphasigen Umrichters nutzt, realisiert werden.

In vielen Anwendungsfällen kommt eine solche Lösung allerdings nicht in Betracht. Oft wird vom Anwender eine konstante Pulsfrequenz des dreiphasigen Umrichters gefordert, eine Forderung, die durch den Einsatz eines Modulationsverfahrens nach dem Prinzip der Pulsweitenmodulation (PWM) erfüllt werden kann [3]. Die innerste regelungstechnische Funktionseinheit bei einem solchen PWM-Verfahren ist aber stets die gesteuerte Einstellung der über jeweils eine Pulsperiode gemittelten Ausgangsspannungen des dreiphasigen Umrichters. In anderen Anwendungsfällen ist die direkte Verbindung der Statorklemmen der Drehstrommaschine mit den Ausgangsklemmen des Umrichters unerwünscht und es wird die Zwischenschaltung eines dreiphasigen LC-Ausgangsfilters mit geregelter Ausgangsspannung gefordert. In beiden Fällen muß die Regelung der Statorströme der Drehstrommaschine unter Verwendung der stetig (beim Betrieb mit LC-Ausgangsfilter) oder quasi-stetig (bei Verwendung der PWM) vorgebbaren Statorspannungen der Drehstrommaschine als Stellgrößen erfolgen.

Der Aufbau einer derartigen Regelung bereitet den Herstellern moderner Regel systeme für Drehstrommaschinen nach wie vor Kopfzerbrechen. Zwei wesentliche Punkte stehen hierbei im Vordergrund:

- Der Frequenzgang der Führungsübertragungsfunktion der Stromregeleinheit sowie
- die unvermeidliche Störbeeinflussung der in Rede stehenden Regelstrecke durch die inneren Spannungen der Drehstrommaschine oder durch mit diesen zusammenhängende Größen.

Sollen die Stromregler mit Größen in einem statororientierten Koordinatensystem arbeiten, so stellt bereits der Frequenzgang der Führungsübertragungsfunktion eines solchen Stromreglers ein massives Problem dar. Gewünscht wird im gesamten, abzudeckenden Frequenzbereich , welcher von 0 bis zu einigen 100 Hz reichen kann, eine Führungsübertragungsfunktion mit einem Betrag von nahezu 1 und einer Phasenverschiebung von nahezu 0. Außerdem wirken die über einen weiten Bereich in Amplitude und Frequenz veränderlichen, induzierten Spannungen der Drehstrommaschine als Störgrößen auf die Stromregelkreise ein. Die Störungsübertragungsfunktion sollte daher im gesamten, abzudeckenden Frequenzbereich einen Betrag von nahezu 0 aufweisen. Diese extremen Anforderungen zeigen, daß es sich hierbei um ein äußerst schwierig zu lösendes Problem handelt. Selbst namhafte, auf dem Gebiet der Regelungstechnik erfahrene Unternehmen betreiben bis heute einen immensen Aufwand, um die Stromregelung von Drehstrommaschinen mit Reglern, welche mit statororientierten Größen arbeiten, zufriedenstellend in den Griff zu bekommen [4].

Etwas günstigere Verhältnisse bestehen, wenn die Stromregler mit Größen im feldorientierten Koordinatensystem oder mit solchen in einem Koordinatensystem, welches gegenüber dem feldorientierten nur eine geringe Rotationsgeschwindigkeit aufweist, arbeitet. Arbeiten die Regler mit feldorientierten Größen, so hat dies den Vorteil, daß es sich sowohl bei den Führungsgrößen als auch bei den Regel- und Störgrößen, welche in den in Rede stehenden Regelkreisen auftreten, im elektrisch eingeschwungenen Zustand der Drehstrommaschine stets um reine Gleichgrößen handelt. Diese Aussage gilt unabhängig von der Drehzahl und vom Belastungszustand der Maschine. Im anderen Fall der Verwendung eines Koordinatensystems, welches gegenüber dem feldorientierten eine geringe Rotationsgeschwindigkeit aufweist, sind die Frequenzen der im elektrisch eingeschwungenen Zustand der Drehstrommaschine auftretenden Größen so gering, daß auch in diesem Fall der Frequenzgang der Führungsübertragungsfunktion eines Stromreglers nicht ins Gewicht fällt. Ein solches Koordinatensystem kann z.B. - bei der Regelung einer Asynchronmaschine - ein rotororientiertes sein. In beiden Fällen müssen an die Führungsübertragungsfunktionen der Stromregler keine so extremen Anforderungen gerichtet werden, wie dies bei der Ausführung der Stromregler mit statororientierten Größen der Fall ist. Ein Nachteil bleibt allerdings bestehen. Dieser soll im folgenden anhand einer Stromregelung mit feldorientierten Größen erläutert werden. Im folgenden werden sämtliche, in Richtung der Achse d des vom Führungssystem angenommenen, feldorientierten Koordinatensystems weisenden Komponenten von Raumzeigern mit dem Index d gekennzeichnet und es werden sämtliche, in Richtung der zugehörigen Achse q weisenden Komponenten von Raumzeigern mit dem Index q gekennzeichnet. Die Komponente $u_d$ des Statorspannungsraumzeigers der Drehstrommaschine wird im folgenden als Längsspannung $u_d$ der Drehstrommaschine bezeichnet. Die Komponente $u_q$ des Statorspannungsraumzeigers der Drehstrommaschine wird im folgenden als Querspannung $u_q$ der Drehstrommaschine bezeichnet.

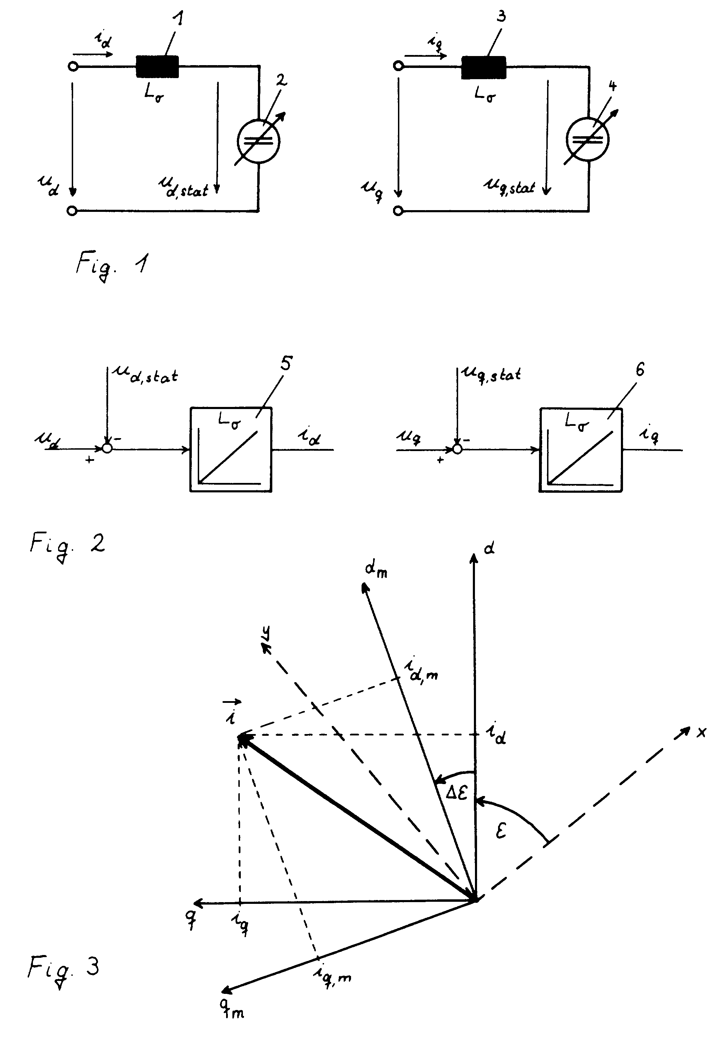

Fig. 1 zeigt das elektrische Ersatzschaltbild der Drehstrommaschine für deren Behandlung im feldorientierten Koordinatensystem. Es besteht zum einen Teil aus der Reihenschaltung einer Drossel mit der Induktivität $L_\sigma$ (1), welche die subtransiente Induktivität der Drehstrommaschine repräsentiert [5] und einer Spannungsquelle mit der Spannung $u_{d,stat}$ (2). Die Spannung $u_{d,stat}$ ist hierbei die im elektrisch eingeschwungenen Zustand benötigte Längsspannung der Drehstrommaschine. Sie wird im folgenden kurz als stationäre Längsspannung $u_{d,stat}$ der Drehstrommaschine bezeichnet. An den Klemmen dieser Reihenschaltung liegt die Längsspannung $u_d$ der Drehstrommaschine an, in der Drossel mit der Induktivität $L_\sigma$ (1) bildet sich der Längsstrom $i_d$ der Drehstrommaschine aus. Der andere Teil des elektrischen Ersatzschaltbildes der Drehstrommaschine besteht in entsprechender Weise aus der Reihenschaltung einer weiteren Drossel mit der Induktivität $L_\sigma$ (3) und einer Spannungsquelle mit der Spannung $u_{q,stat}$ (4). Die Spannung $u_{q,stat}$ ist hierbei die im elektrisch eingeschwungenen Zustand benötigte Querspannung der Drehstrommaschine. Sie wird im folgenden kurz als stationäre Querspannung $u_{q,stat}$ der Drehstrommaschine bezeichnet. An den Klemmen dieser Reihenschaltung liegt die Querspannung $u_q$ der Drehstrommaschine an, in der weiteren Drossel mit der Induktivität $L_\sigma$ bildet sich der Querstrom $i_q$ der Drehstrommaschine aus.

Hieraus ergibt sich direkt das in Fig. 2 dargestellte, regelungstechnische Blockschaltbild der Stromregelstrecken mit der Längsspannung $u_d$ und der Querspannung $u_q$ der Drehstrommaschine als Eingangsgrößen und dem Längsstrom $i_d$ sowie dem Querstrom $i_q$ der Drehstrommaschine als Ausgangsgrößen. Die Differenz zwischen der Längsspannung $u_d$ der Drehstrommaschine und deren stationärer Längsspannung $u_{d,stat}$ wirkt auf den Eingang eines Integrierers mit der Integrationszeitkonstante $L_\sigma$ (5), welcher an seinem Ausgang den Längsstrom $i_d$ der Drehstrommaschine ausgibt. In entsprechender Weise wirkt die Differenz zwischen der Querspannung $u_q$ der Drehstrommaschine und deren stationärer Querspannung $u_{q,stat}$ auf den Eingang eines weiteren Integrierers mit der Integrationszeitkonstante $L_\sigma$ (6), welcher an seinem Ausgang den Querstrom $i_q$ der Drehstrommaschine ausgibt.

Zur Elimination dieser Störgrößen $u_{d,stat}$ und $u_{q,stat}$ wurde von Zimmermann erstmals ein sogenannter Führungsgrößengenerator in einem Regelsystem für Asynchronmaschinen eingesetzt [6]. Dabei werden im Führungssystem die von diesem angenommenen Werte $u_{d,stat,fgg}$ und $u_{q,stat,fgg}$ der Störgrößen $u_{d,stat}$ und $u_{q,stat}$ gemäß in [6] auf S.87 angegebenen Formeln (4.26a) und (4.26b):

$$u_{d,stat,fgg} = R_S \cdot i_{d,soll} - L_\sigma \cdot \omega_S \cdot i_{q,soll} \text{ und (4.26a)}$$

$$u_{q,stat,fgg} = R_S \cdot i_{q,soll} + L_\sigma \cdot \omega_S \cdot i_{d,soll} + \frac{L_H^2}{L_R} \cdot \omega_S \cdot i_{m,fgg} \text{ (4.26b)}$$

ermittelt und ausgegeben. Dabei handelt es sich bei der Größe $R_s$ um den ohmschen Statorwiderstand der zu regelnden Asynchronmaschine, bei der Größe $L_H$ um deren auf die Statorseite bezogene Hauptfeldinduktivität, bei der Größe $L_R$ um deren auf die Statorseite bezogene Rotorinduktivität, bei der Größe $\omega_S$ um die Winkelgeschwindigkeit, mit der das feldorientierte Koordinatensystem des Führungssystems gegenüber einem statororientierten Koordinatensystem rotiert und bei der Größe $i_{m,fgg}$ um den vom Führungssystem angenommenen Wert des Magnetisierungsstroms der Asynchronmaschine. Diese angenommenen Werte der Störgrößen werden dann zu den von den Stromreglern ausgegebenen Spannungssollwerten addiert. In entsprechender Weise kann auch ein Führungsgrößengenerator zur Kompensation der Störgrößen $u_{d,stat}$ und $u_{q,stat}$ in einem Regelsystem für permanenterregte Synchronmaschinen eingesetzt werden. Auf diese Weise wird die Beeinflussung der Regelstrecke aus Fig. 2 durch die Störgrößen $u_{d,stat}$ und $u_{q,stat}$ - wiederum eine optimale Funktion des Führungssystems vorausgesetzt - kompensiert. Die Einschränkung, daß diese Kompensation nur bei optimaler Funktion des Führungssystems erfolgt, nämlich dann, wenn die vom Führungssystem angenommenen Werte der Störgrößen mit deren tatsächlichen Werten übereinstimmen, leitet unmittelbar zum zweiten, speziell die Regelung von Asynchronmaschinen betreffenden Problemkreis über.

Dabei handelt es sich um das Problem der Nachbildung des feldorientierten Koordinatensystems. Bei dem "feldorientierten Koordinatensystem", auf welches sich alle vom Führungssystem ausgegebenen Größen beziehen, handelt es sich nämlich lediglich um ein vom Führungssystem angenommenes, feldorientiertes Koordinatensystem. Dieses stimmt aber keinesfalls notwendigerweise mit dem tatsächlichen, feldorientierten Koordinatensystem überein.

Fig. 3 zeigt eine Momentaufnahme des Raumzeigerdiagramms der in Rede stehenden Asynchronmaschine sowohl mit einem rotororientierten als auch mit einem feldorientierten Koordinatensystem. Die gestrichelt gezeichneten Achsen x und y sind die Achsen eines rotorbezogenen Koordinatensystems, die Achsen d und q sind die Achsen des vom Führungssystem angenommenen, feldorientierten Koordinatensystems. Der Raumzeiger $\vec{i}$ ist schließlich der momentane Statorstromraumzeiger der Asynchronmaschine. Er ist durch seine Komponenten $i_d$ und $i_q$ eindeutig gekennzeichnet. Im Führungssystem wird fortlaufend der Winkel $\varepsilon$, welchen die Achse d mit der Achse x einschließt, gemäß der Gleichung

$$\varepsilon = \int \frac{i_{q,soll}}{i_{m,fgg} \cdot T_{Rq,FS}} \, dt$$

gebildet. $T_{Rq,FS}$ ist hierbei die momentan vom Führungssystem angenommene, in Richtung der Achse q wirksame Rotorzeitkonstante der Asynchronmaschine. Weicht nun $T_{Rq,FS}$ vom tatsächlichen Wert $T_{Rq}$ dieser Zeitkonstante ab, so entsteht ein Fehlwinkel $\Delta\varepsilon$ zwischen dem vom Führungssystem angenommenen feldorientierten Koordinatensystem mit den Achsen d und q und dem tatsächlichen feldorientierten Koordinatensystem mit den Achsen $d_m$ und $q_m$. Es sind aber die Komponenten $i_{d,m}$ und $i_{q,m}$ des Statorstromraumzeigers $\vec{i}$ in diesem, zuletzt genannten Koordinatensystem, deren Regelung eine ideale Entkopplung zwischen der Beeinflussung des Rotorflusses der Asynchronmaschine und der unmittelbaren Beeinflussung von deren inneren Drehmoment erlauben würde. Dem Führungssystem sind jedoch nur die Größen

$$i_d = i_{d,m} \cdot \cos\Delta\varepsilon - i_{q,m} \cdot \sin\Delta\varepsilon$$

sowie

$$i_q = i_{q,m} \cdot \cos\Delta\varepsilon + i_{d,m} \cdot \sin\Delta\varepsilon$$

zugänglich.

Für $\Delta\varepsilon \neq 0$ ist demnach eine Entkopplung der Regelstrecken für den Rotorfluß sowie für das innere Drehmoment der Asynchronmaschine nicht gegeben. Dies wirkt sich wiederum auf den zeitlichen Verlauf des Fehlwinkels $\Delta\varepsilon$ aus. Die Folge hiervon sind im besten Fall unerwünschte Pendelmomente. Bei ungünstigen Betriebszuständen der Asynchronmaschine kann es sogar zu einer Instabilität des gesamten Regelsystems kommen.

Beim derzeitigen Stand der Technik wird dem Auftreten eines Fehlwinkels $\Delta\varepsilon$ durch den Einsatz von Rotorflußbeobachtern begegnet. Diese Rotorflußbeobachter verwenden eine modellhafte Nachbildung der Asynchronmaschine, mit deren Hilfe aus den gemessenen Statorspannungen und -strömen die beobachteten Rotorflußverkettungen gebildet werden [7]. Auch beim Einsatz solcher Rotorflußbeobachter können sich jedoch - insbesondere während Ausgleichsvorgängen im magnetischen Kreis der Maschine - nennenswerte Fehlwinkel $\Delta\varepsilon$ einstellen, sofern die Zeitkonstante $T_{rq}$ nicht genau genug bekannt ist.

Dieser zweite Problemkreis wirft auch ein neues Licht auf die Schwäche der zuvor angeführten Kompensation der Störgrößen $u_{d,stat}$ und $u_{q,stat}$ in den Stromregelkreisen mit Hilfe eines Führungsgrößengenerators. Diese Kompensation erfolgt gesteuert, ausgehend von Größen in dem vom Führungssystem angenommenen feldorientierten Koordinatensystem. Das im Betrieb unvermeidbare Auftreten eines Fehlwinkels $\Delta\varepsilon$ führt sofort zu einer Fehlkompensation der Störgrößen in den Stromregelkreisen und somit zu einem erneuten Einwirken Von Störgrößen auf dieselben. Dies kann im Extremfall sogar dazu führen, daß diese Stromregelkreise instabil werden.

Wie diese Ausführungen zeigen ist die oft aufgestellte Behauptung, feldorientiert geregelte Drehstrommaschinen böten ein dynamisches Verhalten, welches jenem von Gleichstrommaschinen vergleichbar wäre, beim bisherigen Stand der Technik nicht haltbar. Dies gilt insbesondere dann, wenn es sich bei der zu regelnden Drehstrommaschine um eine Asynchronmaschine handelt.

Die hiermit vorgelegte Erfindung ermöglicht jedoch eine dynamisch äußerst hochwertige und gegen Parameterschwankungen extrem unempfindliche Regelung von Drehstrommaschinen. Alle vorab genannten, bisher unvermeidlichen Schwachpunkte solcher Regelsysteme treten bei Verwendung der hiermit vorgelegten Erfindung nicht auf. Eine solchermaßen geregelte Drehstrommaschine bietet, egal ob Asynchron- oder ob Synchronmaschine, tatsächlich ein dynamisches Verhalten, welches jenem einer Gleichstrommaschine in nichts nachsteht.

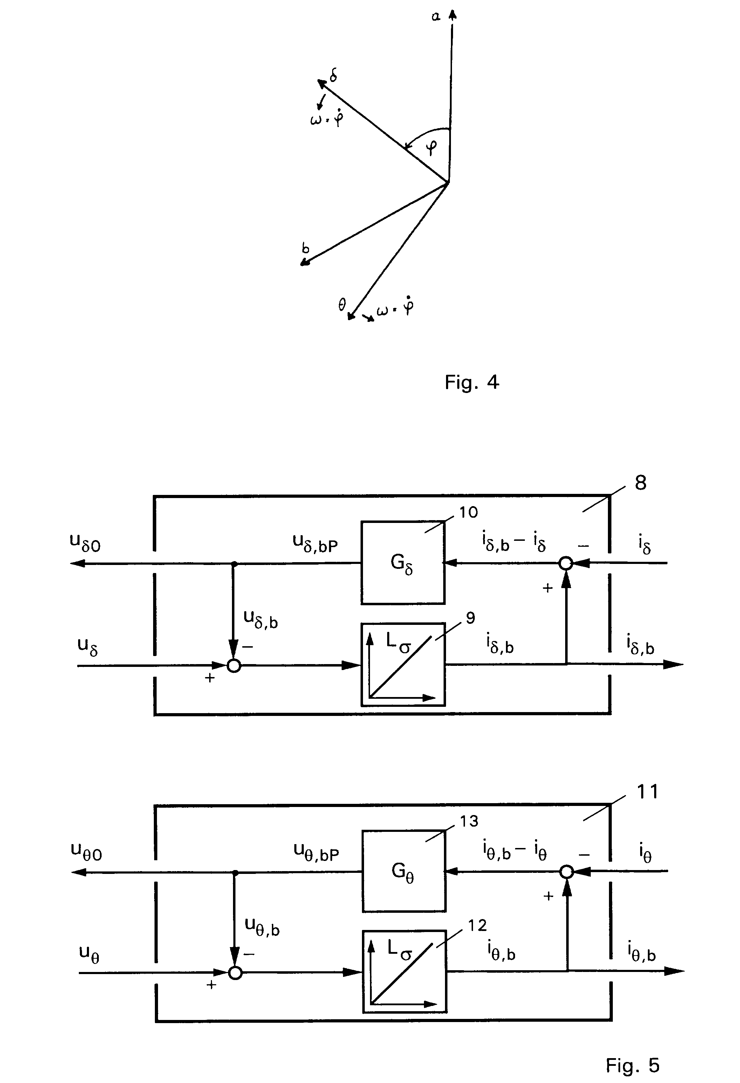

Die Erfindung wird nun anhand der Zeichnung Fig. 4-14 beschrieben. Es zeigt

Fig. 4 ein Diagramm zur Erläuterung der Größen des im erfindungsgemäßen Verfahren verwendeten, rotierenden Bezugskoordinatensystems;

Fig. 5-7 regelungstechnische Blockschaltbilder verschiedener Ausführungsformen der erfindungsgemäßen Einrichtung zur Ermittlung der Komponenten des stationären Spannungsvektors $(u_{\delta 0}, u_{\theta 0})$ ;

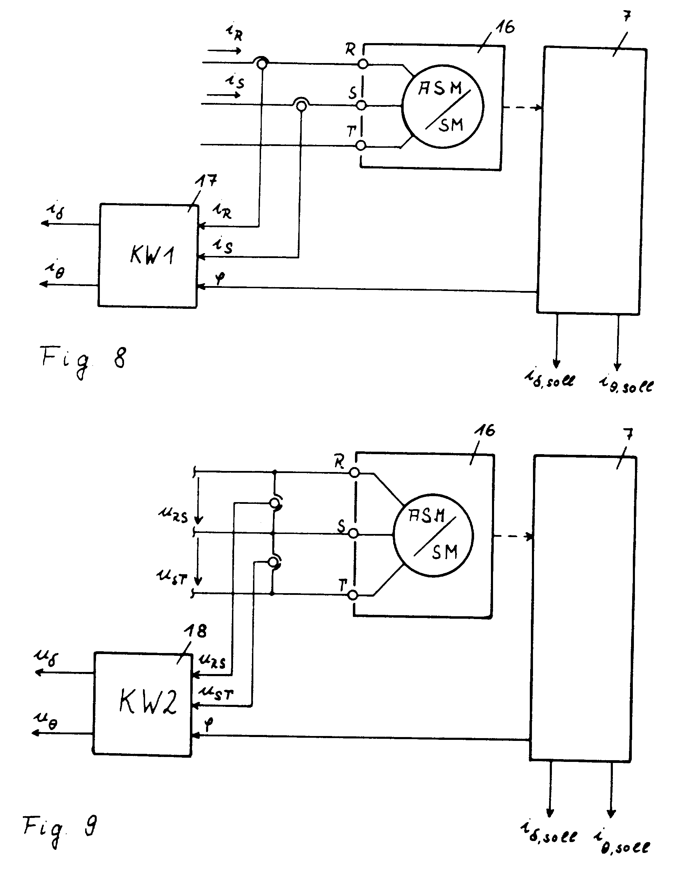

Fig. 8 ein Blockschaltbild zur Erläuterung einer Möglichkeit zur Erfassung der Komponenten des Statorstromvektors $(i_\delta, i_\theta)$ im Bezugskoordinatensystem;

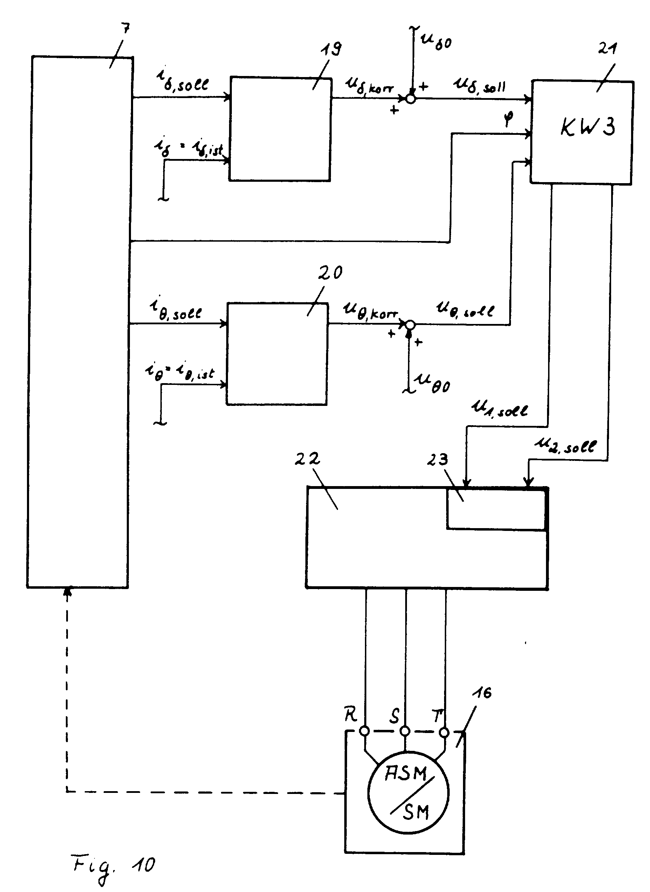

Fig. 9 ein Blockschaltbild zur Erläuterung einer Möglichkeit zur Erfassung der Komponenten des Spannungsvektors $(u_\delta, u_\theta)$ im Bezugskoordinatensystem;

Fig. 10 das Blockschaltbild einer erfindungsgemäßen Stromregelung;

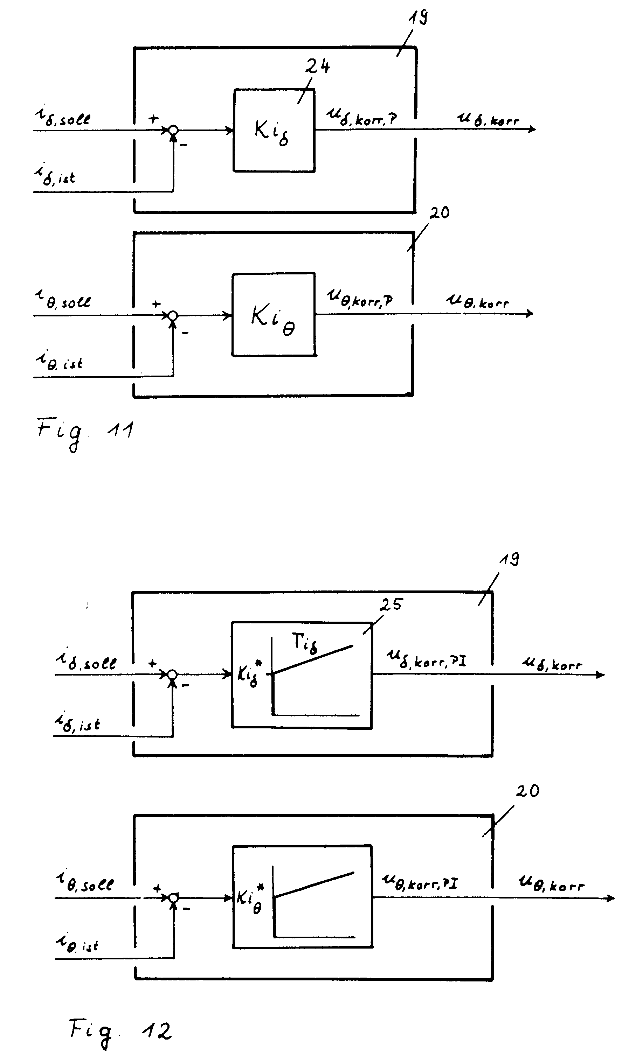

Fig. 11 das Blockschaltbild der Stromregler (19,20) aus Fig. 10 bei deren Ausführung als P-Regler;

Fig. 12 das Blockschaltbild der Stromregler (19,20) aus Fig. 10 bei deren Ausführung als PI-Regler;

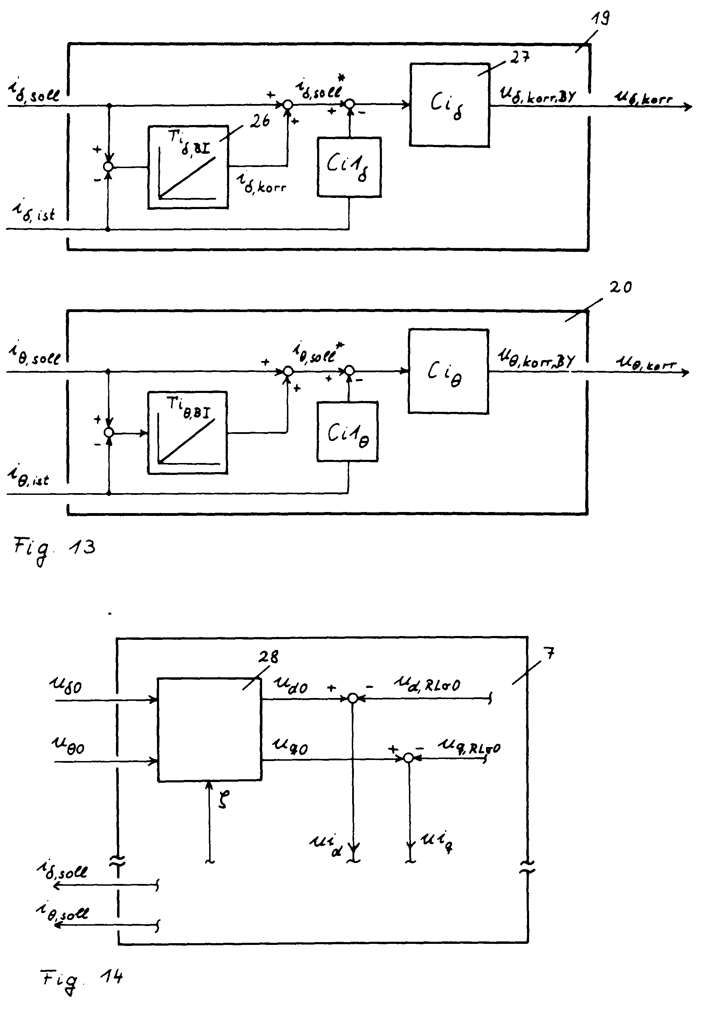

Fig. 13 das Blockschaltbild der Stromregler (19,20) aus Fig. 10 bei deren Ausführung als Bypass-I-Regler;

Fig. 14 das Blockschaltbild einer Einrichtung zur erfindungsgemäßen Nachbildung des Vektors der induzierten Spannungen $(ui_\delta, ui_\theta)$.

Die vorliegende Erfindung macht von einem sogenannten Bezugskoordinatensystem mit den Achsen $\delta$ und $\theta$ Gebrauch. Zur Veranschaulichung der nun folgenden Erläuterungen dient Fig. 4. Das Bezugskoordinatensystem rotiert mit der Bezugswinkelgeschwindigkeit $\omega$ gegenüber einem statorbezogenen Koordinatensystem mit den Achsen a und b. Sämtliche, in Richtung der Achse $\delta$ des Bezugskoordinatensystems weisenden Komponenten von Raumzeigern werden im folgenden mit dem Index $\delta$, sämtliche in Richtung der Achse $\theta$ des Bezugskoordinatensystems weisenden Komponenten von Raumzeigern mit dem Index $\theta$ gekennzeichnet. Des weiteren muß ein mathematischer Zusammenhang zwischen der Bezugswinkelgeschwindigkeit $\omega$ und entweder der, als momentane Statorkreisfrequenz bezeichneten, Winkelgeschwindigkeit $\omega_S$ , mit welcher der vom Führungssystem angenommene Rotorflußraumzeiger gegenüber einem statorbezogenen Koordinatensystem rotiert, oder der Rotordrehzahl n der zu regelnden Drehstrommaschine oder beiden zuletzt genannten Größen bestehen. Eine optimale Funktionsweise der hiermit vorgelegten Erfindung erzielt man, wenn $\omega = \omega_S$ ist. Die Abweichungen von der optimalen Funktionsweise, die in Kauf genommen werden müssen, wenn diese Gleichung nicht exakt gilt, sondern lediglich $\omega \approx \omega_S$ postuliert werden kann, sind jedoch marginal. Infolgedessen besteht bei der Wahl des Bezugskoordinatensystems ein gewisser Freiraum. Ein feldorientiertes Koordinatensystem, ein rotororientiertes Koordinatensystem oder eine Mischform aus beiden seien hier beispielhaft als Möglichkeiten zur Ausführung des Bezugskoordinatensystems angeführt.

In allen Ausbildungsformen der hiermit vorgelegten Erfindung wird ein Führungssystem (7) eingesetzt. Dieses gibt die Sollwerte $i_{\delta,soll}$ und $i_{\theta,soll}$ für die Komponenten $i_\delta$ und $i_\theta$ des Statorstromraumzeigers der Drehstrommaschine an seinen Ausgängen aus.

Eine erste Ausbildungsform der hiermit vorgelegten Erfindung zeigt Fig. 5. Sowohl die als Deltaspannung $u_\delta$ bezeichnete Komponente des Statorspannungsraumzeigers der zu regelnden Drehstrommaschine als auch deren Deltastrom $i_\delta$ werden den zugehörigen Eingängen eines Luenberger-Beobachters [8] für den Deltastrom $i_\delta$ der Drehstrommaschine zugeführt. Dieser Luenberger-Beobachter wird im folgenden als Deltastrombeobachter (8) bezeichnet. Er gibt an seinen Ausgängen zum einen ein Signal $i_{\delta,b}$ und zum anderen ein Signal $u_{\delta 0}$ aus. Das Signal $i_{\delta,b}$ wird im folgenden als beobachteter Deltastrom, das Signal $u_{\delta 0}$ als Signal $u_{\delta 0}$ für die stationäre - also die im elektrisch eingeschwungenen Zustand benötigte - Deltaspannung $u_{\delta,stat}$ der zu regelnden Drehstrommaschine bezeichnet. Im Deltastrombeobachter (8) wird zunächst die Differenz zwischen der Deltaspannung $u_\delta$ der zu regelnden Drehstrommaschine und einem Korrektursignal $u_{\delta,b}$ gebildet und dem Eingang eines ersten Integrierers mit der Integrationszeitkonstante $L_\sigma$ (9) zugeführt. Dessen Ausgangsgröße ist der beobachtete Deltastrom $i_{\delta,b}$ und wird am zugehörigen Ausgang des Deltastrombeobachters (8) ausgegeben. Von diesem beobachteten Deltastrom $i_{\delta,b}$ wird der Deltastrom $i_\delta$ der zu regelnden Drehstrommaschine subtrahiert. Die so gewonnene Größe $i_{\delta,b} - i_\delta$ wird dem Eingang eines Proportionalverstärkers mit dem Verstärkungsfaktor $G_\delta$ (10) zugeführt. Dessen Ausgangsgröße $u_{\delta,bP}$ wird wiederum als Korrektursignal $u_{\delta,b}$ in der hiermit vorgelegten Erfindung verwendet. Dieses Korrektursignal $u_{\delta,b}$ wird nun als Signal $u_{\delta 0}$ für die stationäre Deltaspannung $u_{\delta,stat}$ der zu regelnden Drehstrommaschine am zugehörigen Ausgang des Deltastrombeobachters (8) ausgegeben. In entsprechender Weise werden in der erfindungsgemäßen Einrichtung sowohl die als Thetaspannung $u_\theta$ bezeichnete Komponente des Statorspannungsraumzeigers der zu regelnden Drehstrommaschine als auch deren Thetastrom $i_\theta$ den zugehörigen Eingängen eines Luenberger-Beobachters für den Thetastrom $i_\theta$ der Drehstrommaschine zugeführt. Dieser Luenberger-Beobachter wird im folgenden als Thetastrombeobachter (11) bezeichnet. Er gibt an seinen Ausgängen zum einen ein Signal $i_{\theta,b}$ und zum anderen ein Signal $u_{\theta 0}$ aus. Das Signal $i_{\theta,b}$ wird im folgenden als beobachteter Thetastrom, das Signal $u_{\theta 0}$ als Signal $u_{\theta 0}$ für die stationäre - also die im elektrisch eingeschwungenen Zustand benötigte - Thetaspannung $u_{\theta,stat}$ der zu regelnden Drehstrommaschine bezeichnet. Im Thetastrombeobachter (11) wird zunächst die Differenz zwischen der Thetaspannung $u_\theta$ der zu regelnden Drehstrommaschine und einem Korrektursignal $u_{\theta,b}$ gebildet und dem Eingang eines weiteren Integrierers mit der Integrationszeitkonstante $L_\sigma$ (12) zugeführt. Dessen Ausgangsgröße ist der beobachtete Thetastrom $i_{\theta,b}$ und wird am zugehörigen Ausgang des Thetastrombeobachters (11) ausgegeben. Von diesem beobachteten Thetastrom $i_{\theta,b}$ wird der Thetastrom $i_\theta$ der zu regelnden Drehstrommaschine subtrahiert. Die so gewonnene Größe $i_{\theta,b} - i_\theta$ wird dem Eingang eines Proportionalverstärkers mit dem Verstärkungsfaktor $G_\theta$ (13) zugeführt. Dessen Ausgangsgröße $u_{\theta,bP}$ wird wiederum als Korrektursignal $u_{\theta,b}$ in der hiermit vorgelegten Erfindung verwendet. Dieses Korrektursignal $u_{\theta,b}$ wird nun als Signal $u_{\theta 0}$ für die stationäre Thetaspannung $u_{\theta,stat}$ der zu regelnden Drehstrommaschine am zugehörigen Ausgang des Thetastrombeobachters (11) ausgegeben.

Bei der Anordnung nach Fig. 5 ergeben sich die Übertragungsfunktionen

$$\frac{u_{\delta 0}(p)}{u_{\delta,\text{stat}}(p)} = \frac{1}{1+p\cdot\frac{L_\sigma}{G_\delta}} \quad \text{und} \quad \frac{U_{\delta 0}(p)}{u_{\theta,\text{stat}}(p)} = \frac{1}{1+p\cdot\frac{L_\sigma}{G_\theta}}$$

Die stationären Spannungen $u_{\delta,\text{stat}}$ und $u_{\theta,\text{stat}}$ werden also hier mit einer Verzögerung 1. Ordnung erfaßt. Für diese Erfassung ist lediglich die Kenntnis der subtransienten Induktivität $L_\sigma$ notwendig. Weitere Maschinenparameter werden nicht gebraucht. Des weiteren hat auch eine Fehlorientierung des feldorientierten Koordinatensystems keinerlei Auswirkung auf die Funktion der in Rede stehenden Anordnung, da in ihr weder der Betrag noch die Lage des Magnetisierungsstromraumzeigers im Bezugskoordinatensystem verarbeitet werden.

In dieser, ersten Ausbildungsform der vorliegenden Erfindung sind sowohl der Deltastrombeobachter (8) als auch der Thetastrombeobachter (11) als Beobachter mit bleibender Abweichung des beobachteten Signals vom zu beobachtenden Signal ausgeführt. In vielen Fällen ist es jedoch günstiger, diese beiden Beobachter als Beobachter ohne bleibende Abweichung auszuführen.

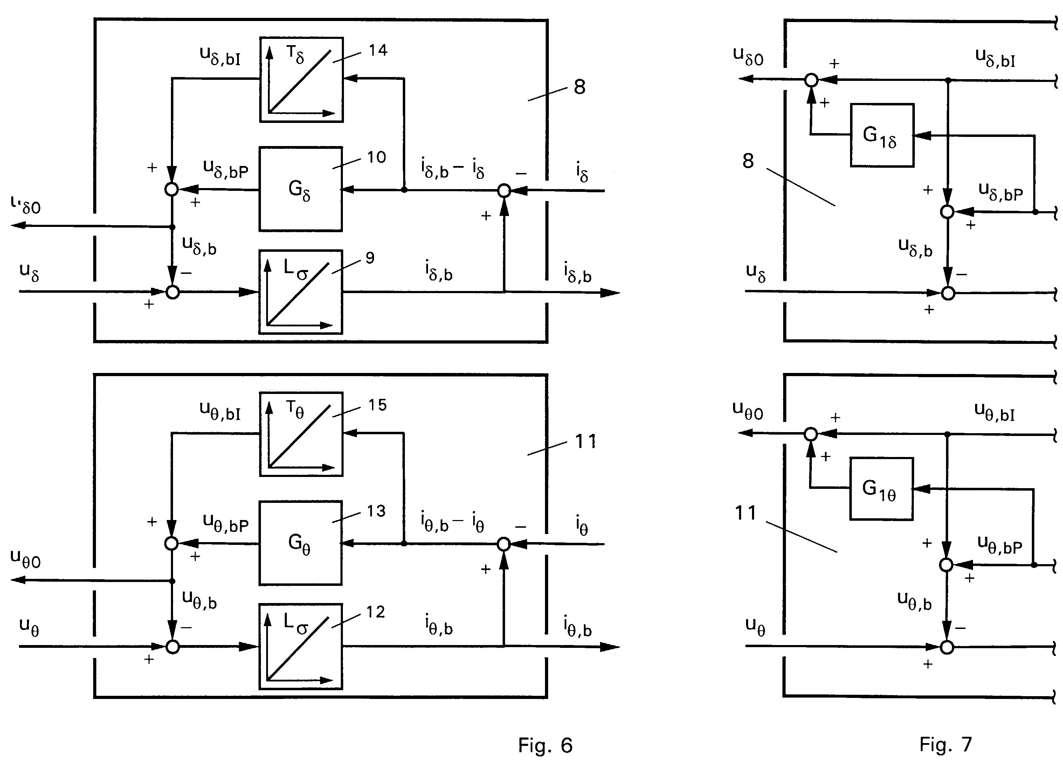

In einer zweiten Ausbildungsform wird die hiermit vorgelegte Erfindung, wie dies in Fig. 6 gezeigt ist, dahingehend erweitert, daß im Deltastrombeobachter (8) das Differenzsignal $i_{\delta,b} - i_\delta$ zusätzlich dem Eingang eines Integrierers mit der Integrationszeitkonstante $T_\delta$ (14) zugeführt wird. Die Ausgangsgröße $u_{\delta,bI}$ dieses Integrierers (14) und die Ausgangsgröße $u_{\delta,bP}$ des Proportionalverstärkers (10) werden addiert. Die so entstandene Summe $u_{\delta,bP} + u_{\delta,bI}$ findet anstelle der Größe $u_{\delta,bP}$ als Korrektursignal $u_{\delta,b}$ in der in Rede stehenden Ausbildungsform der vorliegenden Erfindung Verwendung. In entsprechender Weise wird das Differenzsignal $i_{\theta,b} - i_\theta$ zusätzlich dem Eingang eines Integrierers mit der Integrationszeitkonstante $T_\theta$ (15) zugeführt. Die Ausgangsgröße $u_{\theta,bI}$ dieses Integrierers (15) und die Ausgangsgröße $u_{\theta,bP}$ des Proportionalverstärkers (13) werden addiert. Die so entstandene Summe $u_{\theta,bP} + u_{\theta,bI}$ findet anstelle der Größe $u_{\theta,bP}$ als Korrektursignal $u_{\theta,b}$ in der in Rede stehenden Ausbildungsform der vorliegenden Erfindung Verwendung.

Die Erweiterung der vorstehend geschilderten, zweiten Ausbildungsform der vorliegenden Erfindung zu ihrer dritten Ausbildungsform zeigt Fig. 7. Dort wird im Deltastrombeobachter (8) zusätzlich die Summe $G1_\delta \cdot u_{\delta,bP} + u_{\delta,bI}$ aus der mit dem Faktor $G1_\delta$ gewichteten Ausgangsgröße $u_{\delta,bP}$ des Proportionalverstärkers mit dem Verstärkungsfaktor $G_\delta$ (10) und der Ausgangsgröße $u_{\delta,bI}$ des Integrierers mit der Integrationszeitkonstante $T_\delta$ (14) gebildet und anstelle des Korrektursignals $u_{\delta,b}$ als Signal $u_{\delta 0}$ für die stationäre Deltaspannung $u_{\delta,\text{stat}}$ der zu regelnden Drehstrommaschine verwendet. In entsprechender Weise wird im Thetastrombeobachter (11) die Summe $G1_\theta \cdot u_{\theta,bP} + u_{\theta,bI}$ aus der mit dem Faktor $G1_\theta$ gewichteten Ausgangsgröße $u_{\theta,bp}$ des Proportionalverstärkers mit dem Verstärkungsfaktor $G_\theta$ (13) und der Ausgangsgröße $u_{\theta,bI}$ des Integrierers mit der Integrationszeitkonstante $T_\theta$ (15) gebildet und anstelle des Korrektursignals $u_{\theta,b}$ als Signal $u_{\theta 0}$ für die stationäre Thetaspannung $u_{\theta,\text{stat}}$ der zu regelnden Drehstrommaschine verwendet.

Ein Ausführungsbeispiel für die Erfassung des Deltastroms $i_\delta$ und des Thetastroms $i_\theta$ zeigt Fig. 8. Hierbei werden zunächst zwei, den Statorstromraumzeiger in einem statororientierten Koordinatensystem eindeutig kennzeichnende Statorströme der Drehstrommaschine (16) erfaßt. In dem in Fig. 8 gezeigten Ausführungsbeispiel sind dies die Ströme $i_R$ und $i_S$. Diese Ströme werden nun den zugehörigen Eingängen eines ersten Koordinatenwandlers (17) zugeführt [6]. Des weiteren wird der im folgenden als Bezugswinkel $\varphi$ bezeichnete Winkel zwischen der Achse $\delta$ des Bezugskoordinatensystems und einer frei wählbaren, aber feststehenden Achse des statororientierten Koordinatensystems vom Führungssystem (7) ausgegeben und dem zugehörigen Eingang des ersten Koordinatenwandlers (17) zugeführt. Dieser erste Koordinatenwandler gibt an seinen Ausgängen den Deltastrom $i_\delta$ sowie den Thetastrom $i_\theta$ der Drehstrommaschine (16) aus.

In einem konkreten Beispiel hierzu ist als die oben erwähnte, frei wählbare aber feststehende Achse des statororientierten Koordinatensystems die Achse R gewählt. Des weiteren bilden die Achsen $\delta$ und $\theta$ ein orthogonales Koordinatensystem. In diesem Fall werden die Ausgangsgrößen des ersten Koordinatenwandlers (17) gemäß den folgenden Gleichungen gebildet:

$$i_\delta = i_R \cdot \cos\varphi + \left[\frac{i_R}{\sqrt{3}} + i_S \cdot \frac{2}{\sqrt{3}}\right] \cdot \sin\varphi ;$$

$$i_\theta = \left[\frac{i_R}{\sqrt{3}} + i_S \cdot \frac{2}{\sqrt{3}}\right] \cdot \cos\varphi - i_R \cdot \sin\varphi .$$

Ein Ausführungsbeispiel für die Erfassung der Deltaspannung $u_\delta$ und der Thetaspannung $u_\theta$ zeigt Fig. 9. Hierbei werden zunächst zwei, den Statorspannungsraumzeiger in einem statororientierten Koordinatensystem eindeutig kennzeichnende Statorspannungen der Drehstrommaschine (16) erfaßt. In dem in Fig. 9 gezeigten Ausführungsbeispiel sind dies die Spannungen $u_{RS}$ und $u_{ST}$. Diese Spannungen werden nun den zugehörigen Eingängen eines zweiten Koordinatenwandlers (18) zugeführt. Des weiteren wird der Bezugswinkel φ vom Führungssystem (7) ausgegeben und dem zugehörigen Eingang des zweiten Koordinatenwandlers (18) zugeführt. Dieser zweite Koordinatenwandler gibt an seinen Ausgängen die Deltaspannung $u_\delta$ sowie die Thetaspannung $u_\theta$ der Drehstrommaschine (16) aus.

In einem konkreten Beispiel hierzu ist als die oben erwähnte, frei wählbare aber feststehende Achse des statororientierten Koordinatsystems wiederum die Achse R gewählt. Des weiteren bilden die Achsen δ und θ ein orthogonales Koordinatensystem. In diesem Fall werden die Ausgangsgrößen des zweiten Koordinatenwandlers (18) gemäß den folgenden Gleichungen gebildet:

$$u_\delta = \left[\frac{2}{3}u_{RS} + \frac{1}{3}u_{ST}\right] \cdot \cos\varphi + \frac{u_{ST}}{\sqrt{3}} \cdot \sin\varphi \; ;$$

$$u_\theta = \frac{u_{ST}}{\sqrt{3}} \cdot \cos\varphi - \left[\frac{2}{3}u_{RS} + \frac{1}{3}u_{ST}\right] \cdot \sin\varphi \; .$$

Das maßgebliche Kennzeichen für die vierte Ausbildungsform der hiermit vorgelegten Erfindung zeigt Fig. 10. Der vom Führungssystem (7) ausgegebene Sollwert $i_{\delta,soll}$ für den Deltastrom $i_\delta$ der Drehstrommaschine (16) sowie ein Signal $i_{\delta,ist}$ für dessen Istwert werden den zugehörigen Eingängen eines Deltastromreglers (19) zugeführt. Dieser Deltastromregler gibt an seinem Ausgang eine Größe $u_{\delta,korr}$ aus. Nun wird die Summe aus der Ausgangsgröße $u_{\delta,korr}$ des Deltastromreglers (19) und dem Signal $u_{\delta 0}$ für die stationäre Deltaspannung gebildet und als Sollwert $u_{\delta,soll}$ für die Deltaspannung $u_\delta$ der Drehstrommaschine (16) in der vorliegenden Erfindung verwendet. In entsprechender Weise werden der vom Führungssystem (7) ausgegebene Sollwert $i_{\theta,soll}$ für den Thetastrom $i_\theta$ der Drehstrommaschine (16) sowie ein Signal $i_{\theta,ist}$ für dessen Istwert den zugehörigen Eingängen eines Thetastromreglers (20) zugeführt. Dieser Thetastromregler gibt an seinem Ausgang eine Größe $u_{\theta,korr}$ aus. Nun wird die Summe aus der Ausgangsgröße $u_{\theta,korr}$ des Thetastromreglers (20) und dem Signal $u_{\theta 0}$ für die stationäre Thetaspannung gebildet und als Sollwert $u_{\theta,soll}$ für die Thetaspannung $u_\theta$ der Drehstrommaschine (16) in der vorliegenden Erfindung verwendet. Als Signal $i_{\delta,ist}$ für den Istwert des Deltastroms $i_\delta$ der Drehstrommaschine (16) wird in der in Rede stehenden Ausbildungsform der vorliegenden Erfindung der Deltastrom $i_\delta$ der Drehstrommaschine (16) selbst verwendet. Ebenso wird in der in Rede stehenden Ausbildungsform der vorliegenden Erfindung der Thetastrom $i_\theta$ der Drehstrommaschine (16) selbst als Signal $i_{\theta,ist}$ für dessen Istwert verwendet.

Die Sollwerte $u_{\delta,soll}$ und $u_{\theta,soll}$ für die Delta- und die Thetaspannung der Drehstrommaschine (16) werden nun den zugehörigen Eingängen eines Sollwert-Koordinatenwandlers (21) zugeführt. Der Bezugswinkel φ wird vom Führungssystem (7) ausgegeben und dem zugehörigen Eingang dieses Sollwert-Koordinatenwandlers (21) zugeführt. Dieser Sollwert-Koordinatenwandler (21) gibt an seinen Ausgängen zwei, den Sollwert des Statorspannungsraumzeigers der Drehstrommaschine (16) in einem statororientierten Koordinatensystem eindeutig kennzeichnende Größen $u_{1,soll}$ und $u_{2,soll}$ aus. Diese werden den Sollwerteingängen eines leistungselektronischen Stellglieds (22) mit zugehöriger Steuereinrichtung (23) zugeführt, welches an seinen Ausgangsklemmen einen Spannungsraumzeiger mit den Komponenten $u_1$ und $u_2$ ausgibt. Die Ausgangsklemmen des leistungselektronischen Stellglieds (22) sind mit den zugehörigen Statorklemmen der Drehstrommaschine (16) verbunden.

In einem Ausführungsbeispiel hierzu ist wiederum als frei wählbare, aber feststehende Achse des statororientierten Koordinatensystems die Achse R gewählt. Die Achsen δ und θ bilden wiederum ein orthogonales Koordinatensystem. In dem in Rede stehenden Ausführungsbeispiel ist der Sollwert-Koordinatenwandler (21) so ausgeführt, daß er die Sollwerte $u_{RS,soll}$ und $u_{ST,soll}$ für die Statorspannungen $u_{RS}$ und $u_{ST}$ der Drehstrommaschine (16) ausgibt. Diese Sollwerte werden im Sollwert-Koordinatenwandler in dem in Rede stehenden Ausführungsbeispiel gemäß den folgenden Gleichungen gebildet:

$$u_{RS,soll} = \left[\frac{3}{2}u_{\delta,soll} - \frac{\sqrt{3}}{2}u_{\theta,soll}\right]\cos\varphi - \left[\frac{3}{2}u_{\theta,soll} + \frac{\sqrt{3}}{2}u_{\delta,soll}\right]\sin\varphi$$

und

$$U_{ST,soll} = \sqrt{3}\cdot u_{\theta,soll} \cdot \cos\varphi + \sqrt{3}\cdot u_{\delta,soll} \cdot \sin\varphi .$$

Durch eine kleine Veränderung entsteht aus der soeben beschriebenen, vierten Ausbildungsform der hiermit vorgelegten Erfindung deren fünfte Ausbildungsform. Dabei muß zunächst sichergestellt sein, daß es sich sowohl beim Deltastrombeobachter (8) als auch beim Thetastrombeobachter (11) um Beobachter ohne bleibende Abweichung des beobachteten vom zu beobachtenden Signal handelt. In der in Rede stehenden, fünften Ausbildungsform wird nun dem Deltastromregler (19) anstelle des Deltastroms $i_\delta$ der Drehstrommaschine (16) der beobachtete Deltastrom $i_{\delta,b}$ als Signal $i_{\delta,ist}$ für den Deltastrom $i_\delta$ der Drehstrommaschine (16) zugeführt. In entsprechender Weise wird dem Thetastromregler (20) anstelle des Thetastroms $i_\theta$ der Drehstrommaschine (16) der beobachtete Thetastrom $i_{\theta,b}$ als Signal $i_{\theta,ist}$ für den Thetastrom $i_\theta$ der Drehstrommaschine (16) zugeführt.

In einem ersten Ausführungsbeispiel zur vierten und fünften Ausbildungsform der vorliegenden Erfindung, dessen wesentliche Merkmale in Fig. 11 dargestellt werden, sind der Deltastromregler (19) sowie der Thetastromregler (20) jeweils als Proportionalregler ausgeführt. Hierbei wird im Deltastromregler (19) zunächst die Differenz $i_{\delta,soll}$ - $i_{\delta,ist}$ zwischen dessen beiden Eingangsgrößen gebildet. Diese Differenz wird nun dem Eingang eines Proportionalverstärkers mit dem Verstärkungsfaktor $K_{i\delta}$ (24) zugeführt. Dessen mit $u_{\delta,korr,P}$ bezeichnete Ausgangsgröße wird am Ausgang des Deltastromreglers (19) als Größe $u_{\delta,korr}$ ausgegeben. Der Thetastromregler (20) ist, wie dies in Fig. 11 dargestellt ist, in entsprechender Weise aufgebaut.

In einem zweiten Ausführungsbeispiel hierzu, dessen wesentliche Merkmale in Fig. 12 dargestellt werden, sind der Deltastromregler (19) sowie der Thetastromregler (20) jeweils als PI-Regler ausgeführt. Hierbei wird im Deltastromregler (19) zunächst die Differenz $i_{\delta,soll}$ - $i_{\delta,ist}$ zwischen dessen beiden Eingangsgrößen gebildet. Diese Differenz wird nun dem Eingang eines P-I-Glieds mit dem Proportionalverstärkungsfaktor $Ki_\delta^*$ und der Integrationszeitkonstante $Ti_\delta$ (25) zugeführt. Dessen mit $u_{\delta,korr,PI}$ bezeichnete Ausgangsgröße wird am Ausgang des Deltastromreglers (19) als Größe $u_{\delta,korr}$ ausgegeben. Der Thetastromregler (20) ist, wie dies in Fig. 12 dargestellt ist, in entsprechender Weise aufgebaut.

In einem dritten Ausführungsbeispiel hierzu, dessen wesentliche Merkmale in Fig. 13 dargestellt werden, sind der Deltastromregler (19) sowie der Thetastromregler (20) jeweils als Bypass-I-Regler ausgeführt. Auch hierbei wird im Deltastromregler (19) zunächst die Differenz $i_{\delta,soll}$ - $i_{\delta,ist}$ zwischen dessen beiden Eingangsgrößen gebildet. Diese Differenz wird nun dem Eingang eines Integrierers mit der Integrationszeitkonstante $Ti_{\delta,BI}$ (26) zugeführt. Die mit $i_{\delta,korr}$ bezeichnete Ausgangsgröße dieses Integrierers (26) und der Sollwert $i_{\delta,soll}$ für den Deltastrom $i_\delta$ der Asynchronmaschine (16) werden anschließend addiert. Auf diese Weise entsteht der sogenannte modifizierte Deltastromsollwert $i_{\delta,soll}^*$ = $i_{\delta,soll}$ + $i_{\delta,korr}$ . Nun wird die Differenz $i_{\delta,soll}^*$ - $Ci1_\delta$ · $i_{\delta,ist}$ zwischen dem modifizierten Deltastromsollwert $i_{\delta,soll}^*$ und dem mit dem Faktor $Ci1_\delta$ gewichteten Signal $i_{\delta,ist}$ für den Deltastrom $i_\delta$ der Drehstrommaschine (16) gebildet und dem Eingang eines Proportionalverstärkers mit dem Verstärkungsfaktor $Ci_\delta$ (27) zugeführt. Dessen mit $u_{\delta,korr,BY}$ bezeichnete Ausgangsgröße wird am Ausgang des Deltastromreglers (19) als Größe $u_{\delta,korr}$ ausgegeben. Der Thetastromregler (20) ist, wie dies auch in Fig. 13 dargestellt ist, in entsprechender Weise aufgebaut.

In der sechsten Ausbildungsform der vorliegenden Erfindung wird dem zugehörigen, ersten Eingang des Deltastrombeobachters (8) nicht, wie in den bisher beschriebenen Ausbildungsformen, die Deltaspannung $u_\delta$ der Drehstrommaschine (16), sondern eine Größe $u_{\delta,nb}$ zugeführt. Ebenso wird in der in Rede stehenden, sechsten Ausbildungsform der hiermit vorgelegten Erfindung dem zugehörigen, ersten Eingang des Thetastrombeobachters (11) nicht, wie in den bisher beschriebenen Ausbildungsformen, die Thetaspannung $u_\theta$ der Drehstrommaschine (16), sondern eine Größe $u_{\theta,nb}$ zugeführt. Demzufolge wird im Deltastrombeobachter (8) anstelle der Deltaspannung $u_\delta$ der Drehstrommaschine (16) das Signal $u_{\delta,nb}$ verwendet und es wird im Thetastrombeobachter (11) anstelle der Thetaspannung $u_\theta$ der Drehstrommaschine (16) das Signal $u_{\theta,nb}$ verwendet. Dabei handelt es sich bei der Größe $u_{\delta,nb}$ um ein prinzipbedingt zumindest dynamisch fehlerbehaftetes Signal für die Deltaspannung $u_\delta$ der Drehstrommaschine (16). Dementsprechend handelt es sich bei der Größe $u_{\theta,nb}$ um ein prinzipbedingt zumindest dynamisch fehlerbehaftetes Signal für die Thetaspannung $u_\theta$ der Drehstrommaschine (16).

Ein erstes Ausführungsbeispiel hierzu ist im folgenden geschildert. In diesem Ausführungsbeispiel ist als leistungselektronisches Stellglied (22) mit Steuereinrichtung (23) ein dreiphasiger, pulsweitenmodulierter Umrichter eingesetzt. Unter Verwendung der Sollwerte $u_{\delta,soll}$ für die Deltaspannung $u_\delta$ der Drehstrommaschine (16) und $u_{\theta,soll}$ für deren Thetaspannung $u_\theta$, dem Bezugswinkel $\varphi$ sowie dem Referenzsignal für die Pulsweitenmodulation [3] werden nun die Signale $u_{\delta,nb}$ sowie $u_{\theta,nb}$ gebildet. Auf diese Weise kann bei dem soeben geschilderten Ausführungsbeispiel der Aufwand für eine Erfassung der Statorspannungen der Drehstrommaschine (16) und deren anschließende Transformation in das Bezugskoordinatensystem eingespart werden.

Einen Sonderfall der sechsten Ausbildungsform der vorliegenden Erfindung stellt das im folgenden beschriebene, zweite Ausführungsbeispiel hierzu dar. Hierbei wird der Sollwert $u_{\delta,soll}$ für die Deltaspannung $u_\delta$ der Drehstrommaschine direkt als Größe $u_{\delta,nb}$ verwendet und es wird der Sollwert $u_{\theta,soll}$ für deren Thetaspannung $u_\theta$ direkt als Größe $u_{\theta,nb}$ verwendet.

In der siebten Ausbildungsform der hiermit vorgelegten Erfindung, deren maßgebliches Kennzeichen in Fig. 14 dargestellt ist, werden sowohl das Signal $u_{\delta0}$ für die stationäre Deltaspannung $u_\delta$ der Drehstrommaschine (16) als auch das Signal $u_{\theta0}$ für die stationäre Thetaspannung $u_\theta$ der Drehstrommaschine (16) den in dieser Ausbildungsform vorhandenen, zugehörigen Eingängen des Führungssystems (7) zugeführt. Dort werden diese Signale $u_{\delta0}$ und $u_{\theta0}$ zunächst in das vom Führungssystem (7) angenommene, feldorientierte Koordinatensystem transformiert. Dieses, vom Führungssystem (7) angenommene, feldorientierte Koordinatensystem weist, wie dies bereits eingangs dieser Beschreibung erwähnt wurde, die beiden zueinander orthogonalen Achsen d und q auf. Dabei weist die Achse d stets in die Richtung des vom Führungssystem (7) angenommenen Rotorflußraumzeigers der Drehstrommaschine (16). Die Transformation der Signale $u_{\delta0}$ und $u_{\theta0}$ in das vom Führungssystem angenommene, feldorientierte Koordinatensystem erfolgt, sofern letzteres nicht mit dem Bezugskoordinatensystem identisch ist, mit Hilfe eines internen Koordinatenwandlers (28), welchem an seinen zugehörigen Eingängen die Größen $u_{\delta 0}$ und $u_{\theta 0}$ sowie der Winkel $\zeta$ zwischen der Achse $\delta$ des Bezugs-koordinatensystems und der Achse d des vom Führungssystem (7) angenommenen, feldorientierten Koordinatensystems zugeführt werden und welcher an seinen Ausgängen die Signale $u_{d0}$ für die stationäre Längsspannung $u_{d,stat}$ der Drehstrommaschine (16) sowie $u_{q0}$ für die stationäre Querspannung $u_{q,stat}$ der Drehstrommaschine (16) ausgibt. Des weiteren werden im Führungssystem (7) folgende zwei Größen gebildet:

-  Eine Größe $u_{d,RL\sigma 0}$ , welche ein Maß für die im elektrisch eingeschwungenen Zustand an der Reihenschaltung aus dem ohmschen Statorwiderstand $R_S$ und der subtransienten Induktivität $L_\sigma$ der Drehstrommaschine (16) abfallende Längsspannung $u_{d,RL\sigma,stat} = R_S \cdot i_d - L_\sigma \cdot \omega_S \cdot i_q$ darstellt.
-  Eine Größe $u_{q,RL\sigma}0$ , welche ein Maß für die im elektrisch eingeschwungenen Zustand an der Reihenschaltung aus dem ohmschen Statorwiderstand $R_S$ und der subtransienten Induktivität $L_\sigma$ der Asynchronmaschine (16) abfallende Querspannung $u_{q,RL\sigma,stat} = R_S \cdot i_q + L_\sigma \cdot \omega_S \cdot i_d$ darstellt.

Nun werden im Führungssystem (7) eine Größe $ui_d$ gemäß der Gleichung $ui_d = u_{d0} - u_{d,RL\sigma 0}$ sowie eine Größe $ui_q$ gemäß der Gleichung $ui_q = u_{q0} - u_{q,RL\sigma 0}$ gebildet. Die Größe $ui_d$ wird im folgenden als induzierte Längsspannung $ui_d$ der Drehstrommaschine (16), die Größe $ui_q$ als deren induzierte Querspannung $ui_q$ bezeichnet. Diese Größen $ui_d$ und $ui_q$ werden nun im Führungssystem (7) mit zur Gewinnung des von demselben angenommenen Rotorflußraumzeigers der Drehstrommaschine (16) herangezogen.

Ein Ausführungsbeispiel zu der soeben beschriebenen, siebten Ausbildungsform ist im folgenden geschildert. Hierbei werden im Führungssystem (7) die Größen $u_{d,RL\sigma 0}$ sowie $u_{q,RL\sigma 0}$ gemäß den folgenden Gleichungen gebildet:

-  $u_{d,RL\sigma 0} = R_S \cdot i_{d,soll} - L\sigma \cdot \omega \cdot i_{q,soll}$ sowie
-  $U_{q,RL\sigma 0} = R_S \cdot i_{q,soll} + L_\sigma \cdot \omega \cdot i_{d,soll}$ .

Dabei sind $i_{d,soll}$ der Sollwert für den Längsstrom $i_d$ der Drehstrommaschine (16) und $i_{q,soll}$ der Sollwert für den Querstrom $i_q$ der Drehstrommaschine (16).

Literatur:

| [1] | Blaschke, F. | Das Verfahren der Feldorientierung zur Regelung der Asynchronmaschine. Siemens Forschungs- und Entwicklungsbericht Bd.1 (1972), S. 184 - 193 |
| [2] | Boehringer, A.; Brugger, F. | Transformatorlose Transistor-Pulsum-richter mit Ausgangsleistungen bis 50 kVA. Elektrotechnik und Maschinenbau, 1979, H.12, S. 538 - 545 |
| [3] | Leonhard, W. | Control of electrical drives. Springer, Berlin 1985 |
| [4] | Hügel, H.; Schwesig, G. | Neues Stromregelverfahren für Drehstrom-Asynchronmotoren. Antriebstechnik Bd.30 (1991), H.12, S. 36 - 42 |
| [5] | Boehringer, A. | Der Anlauf von Stromrichtermotoren mit Gleichstromzwischenkreis. Dissertation, Universität Stuttgart, 1965 |
| [6] | Zimmermann, W. | Dynamisch hochwertige Führung umrichtergespeister Asynchronmaschinen mit nahezu rein sinusförmigen Spannungen. Dissertation, Universität Stuttgart, 1987 |
| [7] | Licentia Patent-Verwaltungs GmbH | Deutsche Offenlegungsschrift DE-A-39 00 539 |
| [8] | Luenberger, D.G. | Introduction to Dynamic Systems. New York; Chichester; Brisbane; Toronto : John Wiley & Sons, 1979 |

**Patentansprüche**

1.  Verfahren zur feldorientierten Regelung von Drehstrommaschinen, wobei in einem rotierenden Bezugskoordinatensystem (Achsen $\delta,\theta$)

    a) die Statorspannungen und Statorströme erfaßt und die Komponenten der entsprechenden Vektoren gebildet werden, und

    b) die Komponenten des im elektrisch eingeschwungenen Zustand benötigten, stationären Spannungsvektors

$(u_{\delta 0}, u_{\theta 0})$ aus den Komponenten des erfaßten Stromvektors $(i_\delta, i_\theta)$ und Spannungsvektors $(u_\delta, u_\theta)$ gebildet werden,

dadurch gekennzeichnet,

c1) daß die Differenzen zwischen den Komponenten des erfaßten Spannungsvektors $(u_\delta, u_\theta)$ und den Komponenten eines Korrektursignalvektors $(u_{\delta,b}, u_{\theta,b})$ gebildet, und

c2) mit einer Integrationszeitkonstante, die der subtransienten Induktivität $(L_\sigma)$ entspricht, zu der jeweiligen Komponente des nachgebildeten Stromvektors $(i_{\delta,b}, i_{\theta,b})$ integriert werden, und

d1) daß die Differenzen zwischen den Komponenten des erfaßten $(i_\delta, i_\theta)$ und des nachgebildeten $(i_{\delta,b}, i_{\theta,b})$ Stromvektors gebildet werden, und

d2) daß aus der Differenz $i_\delta - i_{\delta,b}$ durch Multiplikation mit dem Faktor $G_\delta$ sowie aus der Differenz $i_\theta - i_{\theta,b}$ durch Multiplikation mit dem Faktor $G_\theta$ die Komponenten eines Proportional-Korrektursignalvektors $(u_{\delta,bp}, u_{\theta,bp})$ gebildet werden, und

d3) daß die Komponenten des Proportional-Korrektursignalvektors $(u_{\delta,bp}, u_{\theta,bp})$ als die Komponenten des in Satz c1) erwähnten Korrektursignalvektors $(u_{\delta,b}, u_{\theta,b})$ verwendet werden, und

d4) daß die Komponenten des Korrektursignalvektors $(u_{\delta,b}, u_{\theta,b})$ als die jeweiligen Komponenten des stationären Spannungsvektors $(u_{\delta 0}, u_{\theta 0})$ verwendet werden. (Fig. 5)

2. Verfahren nach Anspruch 1, dadurch gekennzeichnet,

a) daß die Differenz $i_\delta - i_{\delta,b}$ zusätzlich mit der Integrationszeitkonstante $T_\delta$ zur Komponente $u_{\delta,bi}$ sowie die Differenz $i_\theta - i_{\theta,b}$ zusätzlich mit der Integrationszeitkonstante $T_\theta$ zur Komponente $u_{\theta,bi}$ eines Integral-Korrektursignalvektors $(u_{\delta,bi}, u_{\theta,bi})$ integriert werden und

b) daß die Komponenten des Korrektursignalvektors $(u_{\delta,b}, u_{\theta,b})$ abweichend vom Merkmal d3) des Anspruchs 1 durch Addition der entsprechenden Komponenten des Proportional-Korrektursignalvektors $(u_{\delta,bp}, u_{\theta,bp})$ und des Integral-Korrektursignalvektors $(u_{\delta,bi}, u_{\theta,bi})$ gebildet werden. (Fig. 6)

3. Verfahren nach Anspruch 2, dadurch gekennzeichnet,

a) daß die Komponente $u_{\delta,bp}$ des Proportional-Korrektursignalvektors $(u_{\delta,bp}, u_{\theta,bp})$ mit einem Faktor $G_{1\delta}$ multipliziert und zur entprechenden Komponente $u_{\delta,bi}$ des Integral-Korrektursignalvektors $(u_{\delta,bi}, u_{\theta,bi})$ addiert wird und die Komponente $u_{\theta,bp}$ des Proportional-Korrektursignalvektors $(u_{\delta,bp}, u_{\theta,bp})$ mit einem Faktor $G_{1\theta}$ multipliziert und zur entprechenden Komponente $u_{\theta,bi}$ des Integral-Korrektursignalvektors $(u_{\delta,bi}, u_{\theta,bi})$ addiert wird, und

b) daß die Komponenten des gemäß Merkmal a) gebildeten Vektors $(u_{\delta,bi} + G_{1\delta} \cdot u_{\delta,bp}, u_{\delta,bi} + G_{1\delta} \cdot u_{\delta,bp})$ anstelle der Komponenten des Korrektursignalvektors $(u_{\delta,b}, u_{\theta,b})$ als die jeweiligen Komponenten des stationären Spannungsvektors $(u_{\delta 0}, u_{\theta 0})$ verwendet werden. (Fig. 7)

4. Verfahren nach einem der vorhergehenden Ansprüche, dadurch gekennzeichnet,

daß die Komponenten des Stromvektors im Bezugskoordinatensystem geregelt werden und zu den Komponenten des Ausgangssignalvektors $(u_{\delta,korr}, u_{\theta,korr})$ der Stromregler (19,20) die Komponenten des stationären Spannungsvektors $(u_{\delta 0}, u_{\theta 0})$ hinzuaddiert werden, wodurch die Komponenten des Sollwertvektors $(u_{\delta,soll}, u_{\theta,soll})$ der Statorspannungen entstehen (Fig. 10)

5. Verfahren nach Anspruch 4 sowie nach einem der Ansprüche 2 oder 3, dadurch gekennzeichnet,

daß den Stromreglern (19,20) anstelle der Komponenten des erfaßten Stromvektors $(i_\delta, i_\theta)$ die entsprechenden Komponenten des nachgebildeten Stromvektors $(i_{\delta,b}, i_{\theta,b})$ zugeführt werden.

6. Verfahren nach einem der vorhergehenden Ansprüche, wobei

a) die Drehstrommaschine aus einem Gerät gespeist wird, welches eine Steuerung oder eine Regelung der Statorspannungen bewirkt und in welchem zum Zwecke dieser Steuerung oder Regelung Statorspannungssollwerte bereitstehen,
dadurch gekennzeichnet,

b) daß die Erfassung der Statorspannungen gemäß Anspruch 1, Satz a, ohne direkte Messung dieser Spannungen aufgrund der in Merkmal a) genannten Statorspannungssollwerte erfolgt.

7. Verfahren nach einem der Ansprüche 1 bis 6, wobei

a) von einem Führungssystem (7) die Komponenten eines Statorstrom-Sollvektors ($i_{d,soll}$, $i_{q,soll}$) in einem vom Führungssystem (7) angenommenen, feldorientierten Koordinatensystem (Achsen d,q) gebildet und in das Bezugskoordinatensystem (Achsen $\delta,\theta$) transformiert werden,
dadurch gekennzeichnet,

b1) daß durch Transformation der Komponenten des stationären Spannungsvektors ($u_{\delta0}$,$u_{\theta0}$) in das vom Füh- rungssystem (7) angenommene, feldorientierte Koordinatensystem die Komponenten eines feldorientierten, stationären Spannungsvektors ($u_{d0}$,$u_{q0}$) gebildet werden, und

b2) daß die Komponenten des Vektors stationären Spannungsfälle an der Reihenschaltung aus dem ohmschen Statorwiderstand $R_s$ und der subtransienten Induktivität $L_\sigma$ ($u_{d,RL\sigma0}$,$u_{q,RL\sigma0}$) gebildet und von den jeweiligen Komponenten des feldorientierten, stationären Spannungsvektors ($u_{d0}$,$u_{q0}$) subtrahiert werden, und

c) daß die Ergebnisse dieser Subtraktionen als Komponenten des Vektors der induzierten Spannungen ($ui_d$,$ui_q$) verwendet werden. (Fig. 14)

8. Vorrichtung zur Durchführung des Verfahrens zur feldorientierten Regelung von Drehstrommaschinen nach einem der Ansprüche 1 und 2

a1) mit Erfassungseinrichtungen für die Statorströme und Statorspannungen,

a2) mit Koordinatenwandlern (KW1, KW2), die aus den erfaßten Statorströmen und Statorspannungen die Komponenten des entsprechenden erfaßten Stromvektors und des entsprechenden erfaßten Spannungsvektors in einem rotierenden Bezugskoordinatensystem (Achsen $\delta,\theta$) bilden,

b) mit einer Modellschaltung, die aus den Komponenten des erfaßten Spannungsvektors ($u_\delta$,$u_\theta$) und des erfaßten Stromvektors ($i_\delta$,$i_\theta$) die Komponenten des im elektrisch eingeschwungenen Zustand benötigten, sta- tionären Spannungsvektors ($u_{\delta0}$,$u_{\theta0}$) ermittelt
dadurch gekennzeichnet, daß die Modellschaltung aufweist:

c) Integrierer (9, 12) mit einer Integrationszeitkonstante, welche der subtransienten Induktivität ($L_\sigma$) entspricht, denen die Differenzen zwischen den Komponenten des erfaßten Spannungsvektors ($u_\delta$,$u_\theta$) und eines Korrek- tursignalvektors ($u_{\delta,b}$,$u_{\theta,b}$) zugeführt werden und deren Ausgangssignale die Komponenten eines nachgebil- deten Stromvektors ($i_{\delta,b}$,$i_{\theta,b}$) darstellen, und

d) Rückkoppelglieder (10, 13 - 15), die entweder als Proportionalglieder (Fig. 5) oder als Proportional-Integral-Glieder (Fig. 6) ausgeführt sind und denen die Differenzen zwischen den Komponenten des erfaßten ($i_\delta$,$i_\theta$) und des nachgebildeten Stromvektors ($i_{\delta,b}$,$i_{\theta,b}$) zugeführt werden und die an ihren Ausgängen die jeweiligen Komponenten des unter Merkmal c) eingeführten Korrektursignalvektors ($u_{\delta,b}$,$u_{\theta,b}$) ausgeben, welche dann als Komponenten des stationären Spannungsvektors ($u_{\delta0}$, $u_{\theta0}$) verwendet werden.

9. Vorrichtung nach Anspruch 8, wobei als Rückkoppelglieder Proportional-Integral-Glieder verwendet werden (Fig. 6), dadurch gekennzeichnet,

a) daß der Proportionalanteil $u_{\delta,bp}$ der Komponente $u_{\delta,b}$ des Korrektursignalvektors ($u_{\delta,b}$,$u_{\theta,b}$) mit Hilfe eines eines zusätzlichen Proportionalglieds mit einem Faktor $G_1\delta$ multipliziert und zum Integralanteil $u_{\delta,bi}$ der Kom- ponente $u_{\delta,b}$ des Korrektursignalvektors ($u_{\delta,b}$,$u_{\theta,b}$) addiert wird und der Proportionalanteil $u_{\theta,bp}$ der Komponente $u_{\theta,b}$ des Korrektursignalvektors ($u_{\delta,b}$,$u_{\theta,b}$) mit Hilfe eines eines zusätzlichen Proportionalglieds mit einem Faktor

$G_{1\theta}$ multipliziert und zum Integralanteil $u_{\theta,bi}$ der Komponente $u_{\theta,b}$ des Korrektursignalvektors ($u_{\delta,b}$,$u_{\theta,b}$) addiert, und

b) daß die Komponenten des gemäß Satz a gebildeten Summenvektors ($u_{\delta,bi}+G_{1\delta}\cdot u_{\delta,bp}$, $u_{\theta,bi}+G_{1\theta}\cdot u_{\theta,bp}$) anstelle der Komponenten des Korrektursignalvektors ($u_{\delta,b}$,$u_{\theta,b}$) als Komponenten des stationären Spannungsvektors ($u_{\delta 0}$,$u_{\theta 0}$) verwendet werden. (Fig. 7)

**Claims**

1. Three-phase machine regulation method, using a rotating reference coordinate system (axes $\delta,\theta$ ), wherein

   a) the stator voltages and the stator currents are captured and the components of the corresponding vectors are generated, and

   b) the components of the voltage vector needed in steady state ($u_{\delta 0}$,$u_{\theta 0}$) are generated proceeding from the components of the vectors of captured currents ($i_{\delta}$,$i_{\theta}$) and captured voltages ($u_{\delta}$ ,$u_{\theta}$), characterized by

   c1) generating the differences between the components of the vector of captured voltages ($u_{\delta}$,$u_{\theta}$) and the components of a vector of feedback signals ($u_{\delta,b}$,$u_{\theta,b}$), and

   c2) integrating these differences to the components of the vector of estimated currents ($i_{\delta,b}$,$i_{\theta,b}$), applying an integration-time constant corresponding to the subtransient inductance ($L_{\sigma}$), and

   d1) generating the differences between the components of the vectors of captured ($i_{\delta}$,$i_{\theta}$) and estimated currents ($i_{\delta,b}$,$i_{\theta,b}$), and

   d2) generating the components of a vector of proportional-feedback signals ($u_{\delta,bp}$,$u_{\theta,bp}$) by multiplying the difference $i_{\delta}$-$i_{\delta,b}$ with the factor $G_{\delta}$ and by multiplying the difference $i_{\theta}$-$i_{\theta,b}$ with the factor $G_{\theta}$, and

   d3) employing the components of the vector of proportional-feedback signals ($u_{\delta,bp}$,$u_{\theta,bp}$) as the components of the vector of feedback signals ($u_{\delta,b}$, $u_{\theta,b}$) mentioned in characteristic c1), and

   d4) employing the components of the vector of feedback signals ($u_{\delta,b}$, $u_{\theta,b}$) as the components of the voltage vector needed in steady state ($u_{\delta 0}$, $u_{\theta 0}$). (Fig. 5)

2. Method according to the cited claim 1, characterized by,

   a) generating the components of a vector of integral-feedback signals ($u_{\delta,bi}$,$u_{\theta,bi}$) by integrating the difference $i_{\delta}$-$i_{\delta,b}$ applying the integration-time constant $T_{\delta}$ and by integrating the difference $i_{\theta}$-$i_{\theta,b}$ applying the integration-time constant $T_{\theta}$, and

   b) employing the sums of the components of the vectors of proportional-feedback signals ($u_{\delta,bp}$,$u_{\theta,bp}$) and of integral-feedback signals ($u_{\delta,bi}$,$u_{\theta,bi}$) as the components of the vector of feedback signals ($u_{\delta,b}$, $u_{\theta,b}$). (Fig. 6)

3. Method according to the cited claim 2, characterized by

   a) multiplying the component $u_{\delta,bp}$ of the vector of proportional-feedback signals ($u_{\delta,bp}$,$u_{\theta,bp}$) with the factor $G_{1\delta}$ and adding the result to the component $u_{\delta,bi}$ of the vector of integral-feedback signals ($u_{\delta,bi}$,$u_{\theta,bi}$), and multiplying the component $u_{\theta,bp}$ of the vector of proportional-feedback signals ($u_{\delta,bp}$,$u_{\theta,bp}$) with the factor $G_{1\theta}$ and adding the result to the component $u_{\theta,bi}$ of the vector of integral-feedback signals ($u_{\delta,bi}$,$u_{\theta,bi}$), and

   b) using the components of the vector ($u_{\delta,bi}+G_{1\delta}\cdot u_{\delta,bp}$, $u_{\delta,bi}+G_{1\delta}\cdot u_{\delta,bp}$), generated according to characteristic a), instead of the components of the vector of feedback signals ($u_{\delta,b}$,$u_{\theta,b}$) as the components of the voltage vector needed in steady state ($u_{\delta 0}$,$u_{\theta 0}$). (Fig. 7)

4. Method according to one of the cited claims 1 to 3 with feedback control of the components of the vector of currents in the reference coordinate system,
characterized by

adding the components of the voltage vector needed in steady state ($u_{\delta0}, u_{\theta0}$) to the components of the current controller's (19,20) vector of output signals ($u_{\delta,korr}, u_{\theta,korr}$), thus generating the components of the vector of the stator voltages' set values ($u_{\delta,soll}, u_{\theta,soll}$). (Fig. 10)

5. Method according to the cited claim 4 and additionally according to one of the cited claims 2 or 3, characterized by, bringing the components of the vector of estimated currents ($i_{\delta,b}, i_{\theta,b}$) instead of the components of the vector of captured currents ($i_{\delta}, i_{\theta}$) to the corresponding inputs of the current controllers (19,20).

6. Method according to one of the cited claims 1 to 5, presupposing

a) that the three-phase machine is operated from an inverter which realizes either feed-forward or feedback control of the stator voltages and which for this reason has ready set values for the stator voltages, characterized by,

b) employing these set values for the stator voltages as the captured stator voltages mentioned in claim 1, characteristic a), thus avoiding the measurement of the stator voltages' true values.

7. Method according to one of the cited claims 1 to 6, presupposing

a) that a superposed motion controller (7) generates the components of the vector of the stator currents' set values ($i_{d,soll}, i_{q,soll}$) in a field-oriented coordinate system (axes d,q) assumed by the superposed motion controller (7) and transforms them into the reference coordinate system, characterized by,

b1) generating the components of a field-oriented voltage vector needed in steady state ($u_{d0}, u_{q0}$) by transforming the components of the voltage vector needed in steady state ($u_{\delta0}, u_{\theta0}$) into the field-oriented coordinate system assumed by the superposed motion controller (7), and

b2) generating the components of the vector of the steady state voltage drops at the series circuit of the stator resistance $R_s$ and the subtransient inductance $L_\sigma$ ($u_{d,RL\sigma0}, u_{q,RL\sigma0}$) and subtracting them from the corresponding components of the field-oriented voltage vector needed in steady state ($u_{d0}, u_{q0}$), and

c) using the results of these subtractions as the components of the vector of the induced voltages ($u_{id}, u_{iq}$) · (Fig. 14)

8. Device for carrying out the three-phase machine regulation method according to one of the claims 1 and 2

a1) with subdevices for capturing the stator currents and the stator voltages, and

a2) with vector transformers (KW1, KW2), which generate the components of the vector of currents and the vector of voltages in the rotating reference coordinate system (axes $\delta,\theta$) proceeding from the captured stator currents and stator voltages, and

b) with a model-circuit, which generates the components of the voltage vector needed in steady state ($u_{\delta0}, u_{\theta0}$) proceeding from the vector of captured voltages ($u_{\delta}, u_{\theta}$) and from the vector of captured currents ($i_{\delta}, i_{\theta}$)

caracterized by the model circuit consisting of:

c) integrators (9, 12) with an integration-time constant, corresponding to the subtransient inductance ($L_\sigma$), to whose inputs are brought the differences between the components of the vector of the captured voltages ($u_{\delta}, u_{\theta}$) and the components of the vector of feedback signals ($u_{\delta,b}, u_{\theta,b}$) and whose output signals are the components of the vector of estimated currents ($i_{\delta,b}, i_{\theta,b}$), and

d) feedback amplifiers (10, 13 - 15), which are carried out either as proportional amplifiers (Fig. 5) or as proportional-integral amplifiers (Fig. 6), to whose inputs are brought the differences between the components of the vector of the captured ($i_\delta, i_\theta$) and the vector of the estimated currents ($i_{\delta,b}, i_{\theta,b}$) and whose output signals are used as the components of the vector of feedback signals ($u_{\delta,b}, u_{\theta,b}$) introduced in characteristic c), which are then employed as the components of the voltage vector needed in steady state ($u_{\delta 0}, u_{\theta 0}$).

9. Device according to the cited claim 8,

whose feedback amplifiers are carried out as proportional-integral amplifiers (Fig . 6),

characterized by,

a) an additional proportional amplifier with the amplifying factor $G_{1\delta}$, to whose input the proportional part $u_{\delta,bp}$ of the component $u_{\delta,b}$ of the vector of feedback signals ($u_{\delta,b}, u_{\theta,b}$) is brought and whose output signal is added to the integral part $u_{\delta,bi}$ of the component $u_{\delta,b}$ of the vector of feedback signals ($u_{\delta,b}, u_{\theta,b}$) and an additional proportional amplifier with the amplifying factor $G_{1\theta}$, to whose input the proportional part $u_{\theta,bp}$ of the component $u_{\theta,b}$ of the vector of feedback signals ($u_{\delta,b}, u_{\theta,b}$) is brought and whose output signal is added to the integral part $u_{\theta,bi}$ of the component $u_{\theta,b}$ of the vector of feedback signals ($u_{\delta,b}, u_{\theta,b}$), and by

b) employing the components of the vector ($u_{\delta,bi} + G_{1\delta} \cdot u_{\delta,bp}$, $u_{\theta,bi} + G_{1\theta} \cdot u_{\theta,bp}$) instead of the components of the vector of feedback signals ($u_{\delta,b}, u_{\theta,b}$) as the components of the voltage vector needed in steady state ($u_{\delta 0}, u_{\theta 0}$). (Fig. 7)

## Revendications

1. Procédé de réglage de machines à courants triphasés, employant un système rotant de coordonnées (axes $\delta, \theta$), qui soit appelé le ,,système de référence", dans lequel

a) les tensions stators et les courants stators sont gagnés et les éléments des vectors appartenants sont formés, et

b) les éléments du vector des tensions stators nécessaires en régime stationnaire ($u_{\delta 0}, u_{\theta 0}$) sont formés partant des éléments des vectors des courants ($i_\delta, i_\theta$) et des tensions ($u_\delta, u_\theta$),
caractérisé par

c1) la génération des différences entre les éléments du vector des tensions ($u_\delta, u_\theta$) et les éléments d'un vector des signals de correction ($u_{\delta,b}, u_{\theta,b}$), et

c2) l'intégration de ces différences aux éléments d'un vector des courants estimés ($i_{\delta,b}, i_{\theta,b}$), applicant un temps normatif d'intégration correspondant à l'inductance subtransiente ($L_\sigma$), et

d1) la génération des différences entre les éléments des vectors des courants ($i_\delta, i_\theta$) et des courants estimés ($i_{\delta,b} i_{\theta,b}$), et

d2) la génération des éléments d'un vector des signals proportionals de correction ($u_{\delta,bp}, u_{\theta,bp}$) par la multiplication de la différence $i_\delta - i_{\delta,b}$ avec le facteur $G_\delta$ et par la multiplication de la différence $i_\theta - i_{\theta,b}$ avec le facteur $G_\theta$, et

d3) l'emploi des éléments du vector des signals proportionals de correction ($u_{\delta,bp}, u_{\theta,bp}$) comme les éléments du vector des signals de correction ($u_{\delta,b}, u_{\theta,b}$) mentionné en marque c1), et

d4) l'emploi des éléments du vector des signals de correction ($u_{\delta,b}, u_{\theta,b}$) comme les éléments du vector des tensions stators nécessaires en régime stationnaire ($u_{\delta 0}, u_{\theta 0}$). (Fig. 5)

2. Procédé conforme à la prétention 1, caractérisé par,

a) la génération des éléments d'un vector des signals intégrals de correction ($u_{\delta,bi}, u_{\theta,bi}$) par l'integration de la différence $i_\delta - i_{\delta,b}$, applicant le temps normatif d'intégration $T_\delta$ et par l'integration de la différence $i_\theta - i_{\theta,b}$, applicant le temps normatif d'intégration $T_\theta$, et

b) l'emploi des sommes des éléments des vectors des signals proportionals des correction ($u_{\delta,bp}, u_{\theta,bp}$) et des signals intégrals de correction ($u_{\delta,bi}, u_{\theta,bi}$) comme les éléments du vector des signals de correction ($u_{\delta,b}, u_{\theta,b}$). (Fig. 6)

3.  Procédé conforme à la prétention 2, caractérisé par

    a) la multiplication de l'élément $u_{\delta,bp}$ du vector des signals proportionals de correction ($u_{\delta,bp}, u_{\theta,bp}$) avec le facteur $G_{1\delta}$ et l'addition de son résultat à l'élément $u_{\delta,bi}$ du vector des signals intégrals de correction ($u_{\delta,bi}, u_{\theta,bi}$), et la multiplication de l'élément $u_{\theta,bp}$ du vector des signals proportionals de correction ($u_{\delta,bp}, u_{\theta,bp}$) avec le facteur $G_{1\theta}$ et l'addition de son résultat à l'élément $u_{\theta,bi}$ du vector des signals intégrals de correction ($u_{\delta,bi}, u_{\theta,bi}$), et

    b) l'emploi des éléments du vector ($u_{\delta,bi}+G_{1\delta}\cdot u_{\delta,bp}$, $u_{\delta,bi}+G_{1\delta}\cdot u_{\delta,bp}$), formé conformement à la marque a) comme les éléments du vector des tensions stators nécessaires en régime stationnaire ($u_{\delta0}, u_{\theta0}$), au lieu des éléments du vector des signals de correction ($u_{\delta,b}, u_{\theta,b}$). (Fig. 7)

4.  Procédé conforme à une des prétentions 1 à 3 avec une réglage des éléments du vector des courants stators dans le système de référence, caractérisé par l'addition des éléments du vector des tensions stators nécessaires en régime stationnaire ($u_{\delta0}, u_{\theta0}$) aux éléments du vector des signals commandés par des régulateurs de courant (19,20) ($u_{\delta,korr}$, $u_{\theta,korr}$), et l'emploi des résultats de ces additions comme les éléments du vector des valeurs demandées des tensions stators ($u_{\delta,Soll}$, $u_{\theta,Soll}$). (Fig. 10)

5.  Procédé conforme à la prétention 4 et en même temps conforme à une des prétentions 2 or 3, caractérisé par,

    l'emploi des éléments du vector des courants estimés ($i_{\delta,b}, i_{\theta,b}$) comme signals de courant pour les régulateurs de courant (19,20) en lieu des éléments du vector des courants ($i_\delta$, $i_\theta$) .

6.  Procédé conforme à une des prétentions 1 à 5, adoptant

    a) que la machine triphasée est alimenté par un inverteur qui est capable d'une réglage des tensions stators et qui donc dispose des valeurs demandées des tensions stators,
    caractérisé par,

    b) l'emploi de ces valeurs demandées des tensions stators comme les tensions stators mentionnées en prétention 1, marque a), évitant ainsi la necessité de mesurer les tensions stators.

7.  Procédé conforme à une des prétentions 1 à 6, adoptant

    a) qu'un régulateur de motion méchanique (7) forme les éléments du vector des valeurs demandées des courants stators ($i_{d,soll}$, $i_{q,soll}$) dans un système des coordonnées flux-orienté (axes d,q), estimé par ce régulateur de motion méchanique (7), et les transforme au système de référence,

    caractérisé par,

    b1) la génération des éléments d'un vector flux-orienté des tensions stators nécessaires en régime stationnaire ($u_{d0}, u_{q0}$) par la transformation des éléments du vector des tensions stators nécessaires en régime stationnaire ($u_{\delta0}, u_{\theta0}$) au système des coordonnées flux-orienté (axes d,q), estimé par ce régulateur de motion méchanique (7), et

    b2) la génération des éléments du vector des pertes de tension en régime stationnaire au résistance stator $R_S$ et à l'inductance subtransiente $L_\sigma$ ($u_{d,RL\sigma0}, u_{q,RL\sigma0}$) et la subtraction d'eux des éléments correspondents du vector flux-orienté des tensions stator nécessaires en régime stationnaire ($u_{d0}, u_{q0}$), et

    c) l'emploi des résultats de ces subtractions comme les éléments du vector des tensions induites ($ui_d, ui_q$). (Fig. 14)

8.  Dispositif pour la réalisation du procédé de réglage de machines à courants triphasés conforme à une des prétentions 1 and 2

a1) avec des dispositifs subordonnés au mesurement des courants stators et des tensions stators, et

a2) avec des calculateurs vectoriels (KW1, KW2), qui forment les éléments du vector des courants stators et du vector des tensions stators dans le système de référence (axes $\delta,\theta$), partant des courants et tensions stators mesurés, et

b) avec une couplage à modèle, qui forme les éléments du vector des tensions stators nécessaires en régime stationnaire ($u_{\delta0},u_{\theta0}$) partant du vector des tensions stators ($u_\delta,u_\theta$) et du vector des courants stators ($i_\delta,i_\theta$)

caractérisé par que la couplage modèle consiste de:

c) intégrateurs (9, 12) avec un temps normatif d'intégration correspondent à l'inductance subtransiente ($L_\sigma$), aux entrées desquels sont conduites les différence des éléments du vector des tensions stators ($u_\delta,u_\theta$) et des éléments du vector des signals de correction ($u_{\delta,b},u_{\theta,b}$) et dont les signals sortants sont les éléments du vector des courants estimés ($i_{\delta,b},i_{\theta,b}$), et

d) amplificateurs (10, 13 - 15), qui sont realisés ou comme des amplificateurs proportionals (Fig. 5) ou comme des amplificateurs proportionals-integrals (Fig. 6), aux entrées desquels sont conduites les différences entre les éléments du vector des courants stators ($i_\delta,i_\theta$) et du vector des courants estimés ($i_{\delta,b},i_{\theta,b}$) et dont les signals de sortie sont employés comme les éléments du vector des signals de correction ($u_{\delta,b},u_{\theta,b}$), introduites en marque c), qui sont employés aussi comme les éléments du vector des tensions stators nécessaires en régime stationnaire ($u_{\delta0}, u_{\theta0}$).

**9.** Dispositif conforme à la prétention 8,

dont les amplificateurs sont realisés comme des amplificateurs proportionals-intégrals (Fig. 6),

caractérisé par,

a) un autre amplificateur proportional avec le facteur d'amplification $G_{1\delta}$, à l'entrée duquel est conduit le part proportional $u_{\delta,bp}$ de l'élément $u_{\delta,b}$ du vector des signals de correction ($u_{\delta,b},u_{\theta,b}$) et dont le signal de sortie est additionné au part intégral $u_{\delta,bi}$ de l'élément $u_{\delta,b}$ du vector des signals de correction ($u_{\delta,b},u_{\theta,b}$) et un autre amplificateur proportional avec le facteur d'amplification $G_{1\theta}$, à l'entrée duquel est conduit le part proportional $u_{\theta,bp}$ de l'élément $u_{\theta,b}$ du vector des signals de correction ($u_{\delta,b},u_{\theta,b}$) et dont le signal de sortie est additionné au part intégral $u_{\theta,bi}$ de l'élément $u_{\theta,b}$ du vector des signals de correction ($u_{\delta,b},u_{\theta,b}$), et par

b) l'emploi des éléments du vector ($u_{\delta,bi}+G_{1\delta}\cdot u_{\delta,bp}$, $u_{\theta,bi}+G_{1\theta}\cdot u_{\theta,bp}$) comme les éléments du vector des tensions stators nécessaires en régime stationnaire ($u_{\delta0},u_{\theta0}$) en lieu des éléments du vector des signals de correction ($u_{\delta,b},u_{\theta,b}$). (Fig. 7)

Fig. 1

Fig. 2

Fig. 3

Fig. 4

Fig. 5

Fig. 6

Fig. 7

EP 0 570 602 B1

Fig 8

Fig 9

Fig. 10

Fig. 11

Fig. 12

Fig. 13

Fig. 14